# EUROPEAN PATENT SPECIFICATION

(11) **EP 3 949 393 B1**
(45) Date of publication and mention of the grant of the patent: **23.09.2026**
(21) Application number: 20718005.0
(22) Date of filing: 09.03.2020
(51) Int. Cl.: H04N 19/117, H04N 19/134, H04N 19/176, H04N 19/82, H04N 19/86

(54) **FIXED FILTERS WITH NON-LINEAR ADAPTIVE LOOP FILTER IN VIDEO CODING**
FESTE FILTER MIT NICHTLINEAREM ADAPTIVEM SCHLEIFENFILTER IN DER VIDEOCODIERUNG
FILTRES FIXES AVEC FILTRE À BOUCLE ADAPTATIF NON LINÉAIRE DANS UN CODAGE VIDÉO

(30) Priority: 25.03.2019 US 201962823546 P; 23.04.2019 US 201962837651 P; 06.03.2020 US 202016811913
(43) Date of publication of application: 09.02.2022
(73) Proprietor: QUALCOMM Incorporated, San Diego, California 92121-1714 (US)
(72) Inventor: HU, Nan, San Diego, California 92121-1714 (US); SEREGIN, Vadim, San Diego, California 92121-1714 (US); KARCZEWICZ, Marta, San Diego, California 92121-1714 (US); EGILMEZ, Hilmi Enes, San Diego, California 92121-1714 (US)
(74) Representative: Reddie & Grose LLP
(86) International application number: PCT/US2020/021750
(87) International publication number: WO 2020/197751

(56) References cited:
- TAQUET (CANON) J ET AL: "CE5: Results of tests CE5-3.1, CE5-3.2, CE5-3.3 and CE5-3.4 on Non-Linear Adaptive Loop Filter", no. JVET-N0242, 19 March 2019 (2019-03-19), XP030203663, Retrieved from the Internet <URL:http://phenix.int-evry.fr/jvet/doc_end_user/documents/14_Geneva/wg11/JVET-N0242-v2.zip JVET-N0242_v2.0.docx> [retrieved on 20190319]
- HU (QUALCOMM) N ET AL: "CE5: Coding tree block based adaptive loop filter (CE5-4)", no. JVET-N0415, 19 March 2019 (2019-03-19), XP030203721, Retrieved from the Internet <URL:http://phenix.int-evry.fr/jvet/doc_end_user/documents/14_Geneva/wg11/JVET-N0415-v2.zip JVET-N0415-v2.docx> [retrieved on 20190319]
- SEREGIN (QUALCOMM) V ET AL: "CE5: Summary Report on Adaptive Loop Filter", no. JVET-N0025, 19 March 2019 (2019-03-19), XP030203579, Retrieved from the Internet <URL:http://phenix.int-evry.fr/jvet/doc_end_user/documents/14_Geneva/wg11/JVET-N0025-v1.zip JVET-N0025.docx> [retrieved on 20190319]
- Y-L CHANG ET AL: "TE10 subtest 3: Controlled clipping", 94. MPEG MEETING; 11-10-2010 - 15-10-2010; GUANGZHOU; (MOTION PICTURE EXPERT GROUP OR ISO/IEC JTC1/SC29/WG11),, no. M18172, 2 October 2010 (2010-10-02), XP030046762

## Description

This application claims the benefit of U.S. Patent Application No. 16/811,913 filed March 6, 2020, U.S. Provisional Patent Application No. 62/823,546, filed March 25, 2019, and U.S. Provisional Patent Application No. 62/837,651, filed April 23, 2019.

### TECHNICAL FIELD

This disclosure relates to video encoding and video decoding.

### BACKGROUND

Digital video capabilities can be incorporated into a wide range of devices, including digital televisions, digital direct broadcast systems, wireless broadcast systems, personal digital assistants (PDAs), laptop or desktop computers, tablet computers, e-book readers, digital cameras, digital recording devices, digital media players, video gaming devices, video game consoles, cellular or satellite radio telephones, so-called "smart phones," video teleconferencing devices, video streaming devices, and the like. Digital video devices implement video coding techniques, such as those described in the standards defined by MPEG-2, MPEG-4, ITU-T H.263, ITU-T H.264/MPEG-4, Part 10, Advanced Video Coding (AVC), ITU-T H.265/High Efficiency Video Coding (HEVC), and extensions of such standards. The video devices may transmit, receive, encode, decode, and/or store digital video information more efficiently by implementing such video coding techniques.

Video coding techniques include spatial (intra-picture) prediction and/or temporal (inter-picture) prediction to reduce or remove redundancy inherent in video sequences. For block-based video coding, a video slice (e.g., a video picture or a portion of a video picture) may be partitioned into video blocks, which may also be referred to as coding tree units (CTUs), coding units (CUs) and/or coding nodes. Video blocks in an intra-coded (I) slice of a picture are encoded using spatial prediction with respect to reference samples in neighboring blocks in the same picture. Video blocks in an inter-coded (P or B) slice of a picture may use spatial prediction with respect to reference samples in neighboring blocks in the same picture or temporal prediction with respect to reference samples in other reference pictures. Pictures may be referred to as frames, and reference pictures may be referred to as reference frames.

Taquet J et al: "CE5: Results of tests CE5-3.1, CE5-3.2, CE5-3.3 and CE5-3.4 on Non-Linear Adaptive Loop Filter", 14. JVET Meeting; 20190319 - 20190327; Geneva; (The Joint Video Exploration Team of ISO/IEC JTC1/SC29/WG11 and ITU-T SG. 16), no. JVET-N0242 19 March 2019 XP030203663 discloses the results of four tests related to the Non-Linear Adaptive Loop filtering as presented in JVET-M0385 where adaptive clipping operation on the input samples values are applied during the Adaptive Loop Filtering in VTM4.0. Hu N et al: "CE5: Coding tree block based adaptive loop filter (CE5-4)", 14. JVET Meeting; 20190319 - 20190327; Geneva; (The Joint Video Exploration Team of ISO/IEC JTC1/SC29/W11 and ITU-T SG. 16), no. JVET-N0415 19 March 2019, XP030203721 discloses the testing of the coding tree block (CTB) based ALF scheme proposed in JVET-K0382, JVET-L0391 and JVET-M0429 in VTM-4.0.

### SUMMARY

In general, this disclosure describes techniques for applying adaptive loop filters (ALFs) in video coding. An ALF may be used by a video encoder or a video decoder to improve the quality of reconstructed video data. As part of applying an ALF, a video coder (e.g., a video encoder or a video decoder) may apply a clipping operation to input values and multiply the resulting clipped values by filter coefficients. The video coder may then add up the resulting values with the value of a current sample to determine a filtered version of the current sample. The techniques of this disclosure may accelerate the process of applying ALFs by avoiding performing of the clipping operation when the filter coefficients are in a predefined fixed filter set. To avoid performing the clipping operation, the video coder may set clipping values to maximum supported values.

The invention is defined by the independent claims to which reference should now be made. Optional features are set forth in the dependent claims.

The details of one or more examples are set forth in the accompanying drawings and the description below. Other features, objects, and advantages will be apparent from the description, drawings, and claims.

### BRIEF DESCRIPTION OF DRAWINGS

FIG. 1 is a block diagram illustrating an example video encoding and decoding system that may perform the techniques of this disclosure.
FIGS. 2A and 2B are conceptual diagrams illustrating an example quadtree binary tree (QTBT) structure, and a corresponding coding tree unit (CTU).
FIG. 3 is a block diagram illustrating an example video encoder that may perform the techniques of this disclosure.
FIG. 4 is a block diagram illustrating an example video decoder that may perform the techniques of this disclosure.
FIG. 5 is a flowchart illustrating an example method for encoding a current block of video data.
FIG. 6 is a flowchart illustrating an example method for decoding a current block of video data.
FIG. 7 is a flowchart illustrating an example operation for applying an Adaptive Loop Filter (ALF) filter to a Coding Tree Block (CTB).

### DETAILED DESCRIPTION

Adaptive Loop Filtering is a technique that may be applied during video encoding and video decoding processes. For instance, a video encoder may apply an Adaptive Loop Filter (ALF) to a coding tree block (CTB) as part of a reconstruction loop. A video decoder may apply an ALF to a CTB after reconstructing the CTB from one or more prediction blocks and residual data.

To apply an ALF to a CTB, a video coder (e.g., a video encoder or a video decoder) may determine a filter set for the CTB. The filter set for a CTB includes a set of filter coefficients. To reduce the amount of data signaled in a bitstream, the filter set of a CTB may be signaled at a level higher than the CTB (e.g., at the level of a sequence parameter set (SPS), picture parameter set (PPS), slice header, etc.), reused from a filter set used for a previously coded CTB, be taken from a plurality of fixed filter sets preconfigured at the video encoder and video decoder, or made available in some other way. The fixed filter sets are preconfigured at the video encoder and video decoder so that filter coefficients of the fixed filter sets do not need to be signaled in a bitstream or reconstructed by the video decoder from data signaled in the bitstream.

During application of an ALF to a CTB, the video coder may clip input values. Clipping the input values limits the input values to a predefined range. The predefined range may be limited by a pair of clipping values, which may also be referred to as clipping parameters. Clipping the input values may ensure that, when the video coder multiplies the input values by corresponding filter coefficients, the resulting values are not so large or so negative that representing the resulting values would require more bits than are available for representing the resulting values. Allowing the resulting values to be so large or so negative that representing the resulting values would require more bits than are available for representing the resulting values may cause errors and may reduce picture quality.

Performance of the clipping operation may slow the process of encoding and decoding video data. This is because the clipping operation may require one or two comparison operations for each input value. In addition, deciding clipping values increases the complexity of an encoder.

Hence, in accordance with a technique of this disclosure, a video coder may determine a filter set for a CTB from a plurality of fixed filter sets. Based on the filter set for the CTB being from the fixed filter sets, the video coder may set clipping values to maximum supported values. Setting the clipping values to the maximum supported values may effectively eliminate the need to perform the clipping operation because the input values are never going to be larger or more negative than the maximum supported values. Use of input values having the maximum supported values may be acceptable because the fixed filter sets may be defined so that no possible input value multiplied by a filter coefficient in the fixed filter sets may result in a value that is so large or so negative that the value cannot be represented using the number of bits available for representing such values. Accordingly, the video coder may determine, based on the clipping values, clipped inputs to an ALF of the filter set (which may be the same as the input values themselves), where each of the inputs is an input sample minus a current sample. The video coder may then apply the ALF to the clipped inputs. In this way, by avoiding performing the clipping operation, the processes of encoding and decoding video data may have a technical advantage of being accelerated relative to processes of encoding and decoding video that do not implement the techniques of this disclosure.

Although this disclosure refers primarily to application of an ALF to a CTB, the techniques of this disclosure may apply to sub-blocks of a CTB, such as coding blocks, or may even apply at the level of individual pixels or samples.

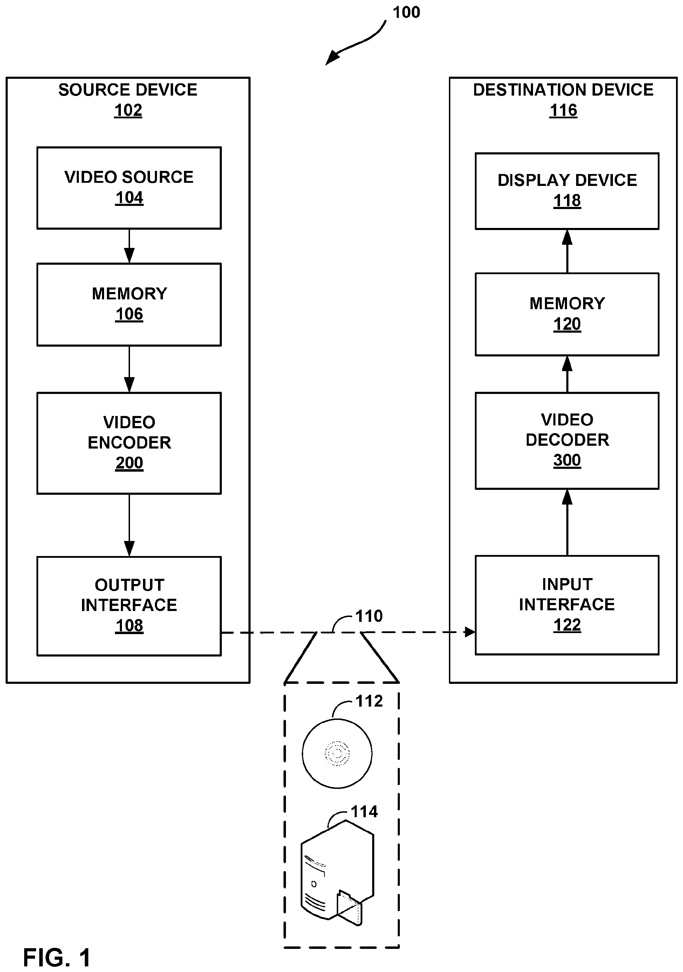

FIG. 1 is a block diagram illustrating an example video encoding and decoding system 100 that may perform the techniques of this disclosure. The techniques of this disclosure are generally directed to coding (encoding and/or decoding) video data. In general, video data includes any data for processing a video. Thus, video data may include raw, unencoded video, encoded video, decoded (e.g., reconstructed) video, and video metadata, such as signaling data.

As shown in FIG. 1, system 100 includes a source device 102 that provides encoded video data to be decoded and displayed by a destination device 116, in this example. In particular, source device 102 provides the video data to destination device 116 via a computer-readable medium 110. Source device 102 and destination device 116 may comprise any of a wide range of devices, including desktop computers, notebook (i.e., laptop) computers, tablet computers, set-top boxes, telephone handsets such as smartphones, televisions, cameras, computers, mobile devices, broadcast receiver devices, display devices, digital media players, video gaming consoles, video streaming device, or the like. In some cases, source device 102 and destination device 116 may be equipped for wireless communication, and thus may be referred to as wireless communication devices.

In the example of FIG. 1, source device 102 includes video source 104, memory 106, video encoder 200, and output interface 108. Destination device 116 includes input interface 122, video decoder 300, memory 120, and display device 118. In accordance with this disclosure, video encoder 200 of source device 102 and video decoder 300 of destination device 116 may be configured to apply the techniques for applying an adaptive loop filter (ALF). Thus, source device 102 represents an example of a video encoding device, while destination device 116 represents an example of a video decoding device. In other examples, a source device and a destination device may include other components or arrangements. For example, source device 102 may receive video data from an external video source, such as an external camera. Likewise, destination device 116 may interface with an external display device, rather than including an integrated display device.

System 100 as shown in FIG. 1 is merely one example. In general, any digital video encoding and/or decoding device may perform techniques for applying an adaptive loop filter (ALF). Source device 102 and destination device 116 are merely examples of such coding devices in which source device 102 generates coded video data for transmission to destination device 116. This disclosure refers to a "coding" device as a device that performs coding (encoding and/or decoding) of data. Thus, video encoder 200 and video decoder 300 represent examples of coding devices, in particular, a video encoder and a video decoder, respectively. In some examples, source device 102 and destination device 116 may operate in a substantially symmetrical manner such that each of source device 102 and destination device 116 include video encoding and decoding components. Hence, system 100 may support one-way or two-way video transmission between source device 102 and destination device 116, e.g., for video streaming, video playback, video broadcasting, or video telephony.

In general, video source 104 represents a source of video data (i.e., raw, uncoded video data) and provides a sequential series of pictures (also referred to as "frames") of the video data to video encoder 200, which encodes data for the pictures. Video source 104 of source device 102 may include a video capture device, such as a video camera, a video archive containing previously captured raw video, and/or a video feed interface to receive video from a video content provider. As a further alternative, video source 104 may generate computer graphics-based data as the source video, or a combination of live video, archived video, and computer-generated video. In each case, video encoder 200 encodes the captured, pre-captured, or computer-generated video data. Video encoder 200 may rearrange the pictures from the received order (sometimes referred to as "display order") into a coding order for coding. Video encoder 200 may generate a bitstream including encoded video data. Source device 102 may then output the encoded video data via output interface 108 onto computer-readable medium 110 for reception and/or retrieval by, e.g., input interface 122 of destination device 116.

Memory 106 of source device 102 and memory 120 of destination device 116 represent general purpose memories. In some example, memories 106, 120 may store raw video data, e.g., raw video from video source 104 and raw, decoded video data from video decoder 300. Additionally or alternatively, memories 106, 120 may store software instructions executable by, e.g., video encoder 200 and video decoder 300, respectively. Although memory 106 and memory 120 are shown separately from video encoder 200 and video decoder 300 in this example, it should be understood that video encoder 200 and video decoder 300 may also include internal memories for functionally similar or equivalent purposes. Furthermore, memories 106, 120 may store encoded video data, e.g., output from video encoder 200 and input to video decoder 300. In some examples, portions of memories 106, 120 may be allocated as one or more video buffers, e.g., to store raw, decoded, and/or encoded video data.

Computer-readable medium 110 may represent any type of medium or device capable of transporting the encoded video data from source device 102 to destination device 116. In one example, computer-readable medium 110 represents a communication medium to enable source device 102 to transmit encoded video data directly to destination device 116 in real-time, e.g., via a radio frequency network or computer-based network. Output interface 108 may modulate a transmission signal including the encoded video data, and input interface 122 may demodulate the received transmission signal, according to a communication standard, such as a wireless communication protocol. The communication medium may comprise any wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from source device 102 to destination device 116.

In some examples, computer-readable medium 110 may include storage device 112. Source device 102 may output encoded data from output interface 108 to storage device 112. Similarly, destination device 116 may access encoded data from storage device 112 via input interface 122. Storage device 112 may include any of a variety of distributed or locally accessed data storage media such as a hard drive, Blu-ray discs, DVDs, CD-ROMs, flash memory, volatile or non-volatile memory, or any other suitable digital storage media for storing encoded video data.

In some examples, computer-readable medium 110 may include file server 114 or another intermediate storage device that may store the encoded video data generated by source device 102. Source device 102 may output encoded video data to file server 114 or another intermediate storage device that may store the encoded video generated by source device 102. Destination device 116 may access stored video data from file server 114 via streaming or download. File server 114 may be any type of server device capable of storing encoded video data and transmitting that encoded video data to the destination device 116. File server 114 may represent a web server (e.g., for a website), a File Transfer Protocol (FTP) server, a content delivery network device, or a network attached storage (NAS) device. Destination device 116 may access encoded video data from file server 114 through any standard data connection, including an Internet connection. This may include a wireless channel (e.g., a Wi-Fi connection), a wired connection (e.g., digital subscriber line (DSL), cable modem, etc.), or a combination of both that is suitable for accessing encoded video data stored on file server 114. File server 114 and input interface 122 may be configured to operate according to a streaming transmission protocol, a download transmission protocol, or a combination thereof.

Output interface 108 and input interface 122 may represent wireless transmitters/receiver, modems, wired networking components (e.g., Ethernet cards), wireless communication components that operate according to any of a variety of IEEE 802.11 standards, or other physical components. In examples where output interface 108 and input interface 122 comprise wireless components, output interface 108 and input interface 122 may be configured to transfer data, such as encoded video data, according to a cellular communication standard, such as 4G, 4G-LTE (Long-Term Evolution), LTE Advanced, 5G, or the like. In some examples where output interface 108 comprises a wireless transmitter, output interface 108 and input interface 122 may be configured to transfer data, such as encoded video data, according to other wireless standards, such as an IEEE 802.11 specification, an IEEE 802.15 specification (e.g., ZigBee^{™}), a Bluetooth^{™} standard, or the like. In some examples, source device 102 and/or destination device 116 may include respective system-on-a-chip (SoC) devices. For example, source device 102 may include an SoC device to perform the functionality attributed to video encoder 200 and/or output interface 108, and destination device 116 may include an SoC device to perform the functionality attributed to video decoder 300 and/or input interface 122.

The techniques of this disclosure may be applied to video coding in support of any of a variety of multimedia applications, such as over-the-air television broadcasts, cable television transmissions, satellite television transmissions, Internet streaming video transmissions, such as dynamic adaptive streaming over HTTP (DASH), digital video that is encoded onto a data storage medium, decoding of digital video stored on a data storage medium, or other applications.

Input interface 122 of destination device 116 receives an encoded video bitstream from computer-readable medium 110 (e.g., a communication medium, storage device 112, file server 114, or the like). The encoded video bitstream computer-readable medium 110 may include signaling information defined by video encoder 200, which is also used by video decoder 300, such as syntax elements having values that describe characteristics and/or modes for processing of video blocks or other coded units (e.g., slices, pictures, groups of pictures, sequences, or the like). Display device 118 displays decoded pictures of the decoded video data to a user. Display device 118 may represent any of a variety of display devices such as a cathode ray tube (CRT), a liquid crystal display (LCD), a plasma display, an organic light emitting diode (OLED) display, or another type of display device.

Although not shown in FIG. 1, in some examples, video encoder 200 and video decoder 300 may each be integrated with an audio encoder and/or audio decoder, and may include appropriate MUX-DEMUX units, or other hardware and/or software, to handle multiplexed streams including both audio and video in a common data stream. If applicable, MUX-DEMUX units may conform to the ITU H.223 multiplexer protocol, or other protocols such as the user datagram protocol (UDP).

Video encoder 200 and video decoder 300 each may be implemented as any of a variety of suitable encoder and/or decoder circuitry, such as one or more microprocessors, digital signal processors (DSPs), application specific integrated circuits (ASICs), field programmable gate arrays (FPGAs), discrete logic, software, hardware, firmware or any combinations thereof. When the techniques are implemented partially in software, a device may store instructions for the software in a suitable, non-transitory computer-readable medium and execute the instructions in hardware using one or more processors to perform the techniques of this disclosure. Each of video encoder 200 and video decoder 300 may be included in one or more encoders or decoders, either of which may be integrated as part of a combined encoder/decoder (CODEC) in a respective device. A device including video encoder 200 and/or video decoder 300 may comprise an integrated circuit, a microprocessor, and/or a wireless communication device, such as a cellular telephone.

Video encoder 200 and video decoder 300 may operate according to a video coding standard, such as ITU-T H.265, also referred to as High Efficiency Video Coding (HEVC) or extensions thereto, such as the multi-view and/or scalable video coding extensions. Alternatively, video encoder 200 and video decoder 300 may operate according to other proprietary or industry standards, such as the Joint Exploration Test Model (JEM) or ITU-T H.266, also referred to as Versatile Video Coding (VVC). A recent draft of the VVC standard is described in Bross, et al. "Versatile Video Coding (Draft 4)," Joint Video Experts Team (JVET) of ITU-T SG 16 WP 3 and ISO/IEC JTC 1/SC 29/WG 11, 13th Meeting: Marrakech, MA, 9-18 January 2019, JVET-M1001-v5 (hereinafter "VVC Draft 4"). The techniques of this disclosure, however, are not limited to any particular coding standard.

In general, video encoder 200 and video decoder 300 may perform block-based coding of pictures. The term "block" generally refers to a structure including data to be processed (e.g., encoded, decoded, or otherwise used in the encoding and/or decoding process). For example, a block may include a two-dimensional matrix of samples of luminance and/or chrominance data. In general, video encoder 200 and video decoder 300 may code video data represented in a YUV (e.g., Y, Cb, Cr) format. That is, rather than coding red, green, and blue (RGB) data for samples of a picture, video encoder 200 and video decoder 300 may code luminance and chrominance components, where the chrominance components may include both red hue and blue hue chrominance components. In some examples, video encoder 200 converts received RGB formatted data to a YUV representation prior to encoding, and video decoder 300 converts the YUV representation to the RGB format. Alternatively, pre- and post-processing units (not shown) may perform these conversions.

This disclosure may generally refer to coding (e.g., encoding and decoding) of pictures to include the process of encoding or decoding data of the picture. Similarly, this disclosure may refer to coding of blocks of a picture to include the process of encoding or decoding data for the blocks, e.g., prediction and/or residual coding. An encoded video bitstream generally includes a series of values for syntax elements representative of coding decisions (e.g., coding modes) and partitioning of pictures into blocks. Thus, references to coding a picture or a block should generally be understood as coding values for syntax elements forming the picture or block.

HEVC defines various blocks, including coding units (CUs), prediction units (PUs), and transform units (TUs). According to HEVC, a video coder (such as video encoder 200) partitions a coding tree unit (CTU) into CUs according to a quadtree structure. That is, the video coder partitions CTUs and CUs into four equal, nonoverlapping squares, and each node of the quadtree has either zero or four child nodes. Nodes without child nodes may be referred to as "leaf nodes," and CUs of such leaf nodes may include one or more PUs and/or one or more TUs. The video coder may further partition PUs and TUs. For example, in HEVC, a residual quadtree (RQT) represents partitioning of TUs. In HEVC, PUs represent inter-prediction data, while TUs represent residual data. CUs that are intra-predicted include intra-prediction information, such as an intra-mode indication.

As another example, video encoder 200 and video decoder 300 may be configured to operate according to JEM or VVC. According to JEM or VVC, a video coder (such as video encoder 200) partitions a picture into a plurality of coding tree units (CTUs). Video encoder 200 may partition a CTU according to a tree structure, such as a quadtree-binary tree (QTBT) structure or Multi-Type Tree (MTT) structure. The QTBT structure removes the concepts of multiple partition types, such as the separation between CUs, PUs, and TUs of HEVC. A QTBT structure includes two levels: a first level partitioned according to quadtree partitioning, and a second level partitioned according to binary tree partitioning. A root node of the QTBT structure corresponds to a CTU. Leaf nodes of the binary trees correspond to coding units (CUs).

In an MTT partitioning structure, blocks may be partitioned using a quadtree (QT) partition, a binary tree (BT) partition, and one or more types of triple tree (TT) partitions. A triple tree partition is a partition where a block is split into three sub-blocks. In some examples, a triple tree partition divides a block into three sub-blocks without dividing the original block through the center. The partitioning types in MTT (e.g., QT, BT, and TT), may be symmetrical or asymmetrical.

In some examples, video encoder 200 and video decoder 300 may use a single QTBT or MTT structure to represent each of the luminance and chrominance components, while in other examples, video encoder 200 and video decoder 300 may use two or more QTBT or MTT structures, such as one QTBT/MTT structure for the luminance component and another QTBT/MTT structure for both chrominance components (or two QTBT/MTT structures for respective chrominance components).

Video encoder 200 and video decoder 300 may be configured to use quadtree partitioning per HEVC, QTBT partitioning, MTT partitioning, or other partitioning structures. For purposes of explanation, the description of the techniques of this disclosure is presented with respect to QTBT partitioning. However, it should be understood that the techniques of this disclosure may also be applied to video coders configured to use quadtree partitioning, or other types of partitioning as well.

This disclosure may use "NxN" and "N by N" interchangeably to refer to the sample dimensions of a block (such as a CU or other video block) in terms of vertical and horizontal dimensions, e.g., 16x16 samples or 16 by 16 samples. In general, a 16x16 CU will have 16 samples in a vertical direction (y = 16) and 16 samples in a horizontal direction (x = 16). Likewise, an NxN CU generally has N samples in a vertical direction and N samples in a horizontal direction, where N represents a nonnegative integer value. The samples in a CU may be arranged in rows and columns. Moreover, CUs need not necessarily have the same number of samples in the horizontal direction as in the vertical direction. For example, CUs may comprise NxM samples, where M is not necessarily equal to N.

Video encoder 200 encodes video data for CUs representing prediction and/or residual information, and other information. The prediction information indicates how the CU is to be predicted in order to form a prediction block for the CU. The residual information generally represents sample-by-sample differences between samples of the CU prior to encoding and the prediction block.

To predict a CU, video encoder 200 may generally form a prediction block for the CU through inter-prediction or intra-prediction. Inter-prediction generally refers to predicting the CU from data of a previously coded picture, whereas intra-prediction generally refers to predicting the CU from previously coded data of the same picture. To perform inter-prediction, video encoder 200 may generate the prediction block using one or more motion vectors. Video encoder 200 may generally perform a motion search to identify a reference block that closely matches the CU, e.g., in terms of differences between the CU and the reference block. Video encoder 200 may calculate a difference metric using a sum of absolute difference (SAD), sum of squared differences (SSD), mean absolute difference (MAD), mean squared differences (MSD), or other such difference calculations to determine whether a reference block closely matches the current CU. In some examples, video encoder 200 may predict the current CU using uni-directional prediction or bi-directional prediction.

Some examples of JEM and VVC also provide an affine motion compensation mode, which may be considered an inter-prediction mode. In affine motion compensation mode, video encoder 200 may determine two or more motion vectors that represent non-translational motion, such as zoom in or out, rotation, perspective motion, or other irregular motion types.

To perform intra-prediction, video encoder 200 may select an intra-prediction mode to generate the prediction block. Some examples of JEM and VVC provide sixty-seven intra-prediction modes, including various directional modes, as well as planar mode and DC mode. In general, video encoder 200 selects an intra-prediction mode that describes neighboring samples to a current block (e.g., a block of a CU) from which to predict samples of the current block. Such samples may generally be above, above and to the left, or to the left of the current block in the same picture as the current block, assuming video encoder 200 codes CTUs and CUs in raster scan order (left to right, top to bottom).

Video encoder 200 encodes data representing the prediction mode for a current block. For example, for inter-prediction modes, video encoder 200 may encode data representing which of the various available inter-prediction modes is used, as well as motion information for the corresponding mode. For uni-directional or bi-directional inter-prediction, for example, video encoder 200 may encode motion vectors using advanced motion vector prediction (AMVP) or merge mode. Video encoder 200 may use similar modes to encode motion vectors for affine motion compensation mode.

Following prediction, such as intra-prediction or inter-prediction of a block, video encoder 200 may calculate residual data for the block. The residual data, such as a residual block, represents sample by sample differences between the block and a prediction block for the block, formed using the corresponding prediction mode. Video encoder 200 may apply one or more transforms to the residual block, to produce transformed data in a transform domain instead of the sample domain. For example, video encoder 200 may apply a discrete cosine transform (DCT), an integer transform, a wavelet transform, or a conceptually similar transform to residual video data. Additionally, video encoder 200 may apply a secondary transform following the first transform, such as a mode-dependent non-separable secondary transform (MDNSST), a signal dependent transform, a Karhunen-Loeve transform (KLT), or the like. Video encoder 200 produces transform coefficients following application of the one or more transforms.

As noted above, following any transforms to produce transform coefficients, video encoder 200 may perform quantization of the transform coefficients. Quantization generally refers to a process in which transform coefficients are quantized to possibly reduce the amount of data used to represent the transform coefficients, providing further compression. By performing the quantization process, video encoder 200 may reduce the bit depth associated with some or all of the transform coefficients. For example, video encoder 200 may round an n-bit value down to an m-bit value during quantization, where *n* is greater than *m.* In some examples, to perform quantization, video encoder 200 may perform a bitwise right-shift of the value to be quantized.

Following quantization, video encoder 200 may scan the transform coefficients, producing a one-dimensional vector from the two-dimensional matrix including the quantized transform coefficients. The scan may be designed to place higher energy (and therefore lower frequency) transform coefficients at the front of the vector and to place lower energy (and therefore higher frequency) transform coefficients at the back of the vector. In some examples, video encoder 200 may utilize a predefined scan order to scan the quantized transform coefficients to produce a serialized vector, and then entropy encode the quantized transform coefficients of the vector. In other examples, video encoder 200 may perform an adaptive scan. After scanning the quantized transform coefficients to form the one-dimensional vector, video encoder 200 may entropy encode the one-dimensional vector, e.g., according to context-adaptive binary arithmetic coding (CABAC). Video encoder 200 may also entropy encode values for syntax elements describing metadata associated with the encoded video data for use by video decoder 300 in decoding the video data.

To perform CABAC, video encoder 200 may assign a context within a context model to a symbol to be transmitted. The context may relate to, for example, whether neighboring values of the symbol are zero-valued or not. The probability determination may be based on a context assigned to the symbol.

Video encoder 200 may further generate syntax data, such as block-based syntax data, picture-based syntax data, and sequence-based syntax data, to video decoder 300, e.g., in a picture header, a block header, a slice header, or other syntax data, such as a sequence parameter set (SPS), picture parameter set (PPS), or video parameter set (VPS). Video decoder 300 may likewise decode such syntax data to determine how to decode corresponding video data.

In this manner, video encoder 200 may generate a bitstream including encoded video data, e.g., syntax elements describing partitioning of a picture into blocks (e.g., CUs) and prediction and/or residual information for the blocks. Ultimately, video decoder 300 may receive the bitstream and decode the encoded video data.

In general, video decoder 300 performs a reciprocal process to that performed by video encoder 200 to decode the encoded video data of the bitstream. For example, video decoder 300 may decode values for syntax elements of the bitstream using CABAC in a manner substantially similar to, albeit reciprocal to, the CABAC encoding process of video encoder 200. The syntax elements may define partitioning information for partitioning a picture into CTUs, and partitioning of each CTU according to a corresponding partition structure, such as a QTBT structure, to define CUs of the CTU. The syntax elements may further define prediction and residual information for blocks (e.g., CUs) of video data.

The residual information may be represented by, for example, quantized transform coefficients. Video decoder 300 may inverse quantize and inverse transform the quantized transform coefficients of a block to reproduce a residual block for the block. Video decoder 300 uses a signaled prediction mode (intra- or inter-prediction) and related prediction information (e.g., motion information for inter-prediction) to form a prediction block for the block. Video decoder 300 may then combine the prediction block and the residual block (on a sample-by-sample basis) to reproduce the original block. Video decoder 300 may perform additional processing, such as performing a deblocking process to reduce visual artifacts along boundaries of the block.

A bitstream may comprise a sequence of network abstraction layer (NAL) units. A NAL unit is a syntax structure containing an indication of the type of data in the NAL unit and bytes containing that data in the form of a raw byte sequence payload (RBSP) interspersed as necessary with emulation prevention bits. Each of the NAL units may include a NAL unit header and may encapsulate a RBSP. The NAL unit header may include a syntax element indicating a NAL unit type code. The NAL unit type code specified by the NAL unit header of a NAL unit indicates the type of the NAL unit. A RBSP may be a syntax structure containing an integer number of bytes that is encapsulated within a NAL unit. In some instances, an RBSP includes zero bits.

As noted above, a bitstream may include a representation of encoded pictures of the video data and associated data. The associated data may include parameter sets. NAL units may encapsulate RBSPs for video parameter sets (VPSs), sequence parameter sets (SPSs), and picture parameter sets (PPSs). A VPS is a syntax structure comprising syntax elements that apply to zero or more entire coded video sequences (CVSs). An SPS is also a syntax structure comprising syntax elements that apply to zero or more entire CVSs. An SPS may include a syntax element that identifies a VPS that is active when the SPS is active. Thus, the syntax elements of a VPS may be more generally applicable than the syntax elements of an SPS. A PPS is a syntax structure comprising syntax elements that apply to zero or more coded pictures. A PPS may include a syntax element that identifies an SPS that is active when the PPS is active. A slice header of a slice segment may include a syntax element that indicates a PPS that is active when the slice segment is being coded.

Furthermore, in VVC Draft 4, the parameter sets may include Adaptation Parameter Sets (APSs). An APS is a syntax structure containing syntax elements that apply to zero or more slices as determined by zero or more syntax elements found in slice headers. APSs may be stored in memory in a first-in-first-out manner. APSs may be used for syntax elements that change more frequently than syntax elements in VPSs, SPSs, or PPSs, but less frequently than syntax elements in slice headers.

As mentioned above, video encoder 200 and video decoder 300 may apply CABAC encoding and decoding to values of syntax elements. To apply CABAC encoding to a syntax element, video encoder 200 may binarize the value of the syntax element to form a series of one or more bits, which are referred to as "bins." In addition, video encoder 200 may identify a coding context. The coding context may identify probabilities of bins having particular values. For instance, a coding context may indicate a 0.7 probability of coding a 0-valued bin and a 0.3 probability of coding a 1-valued bin. After identifying the coding context, video encoder 200 may divide an interval into a lower sub-interval and an upper sub-interval. One of the sub-intervals may be associated with the value 0 and the other sub-interval may be associated with the value 1. The widths of the sub-intervals may be proportional to the probabilities indicated for the associated values by the identified coding context. If a bin of the syntax element has the value associated with the lower sub-interval, the encoded value may be equal to the lower boundary of the lower sub-interval. If the same bin of the syntax element has the value associated with the upper sub-interval, the encoded value may be equal to the lower boundary of the upper sub-interval. To encode the next bin of the syntax element, video encoder 200 may repeat these steps with the interval being the sub-interval associated with the value of the encoded bit. When video encoder 200 repeats these steps for the next bin, video encoder 200 may use modified probabilities based on the probabilities indicated by the identified coding context and the actual values of bins encoded.

When video decoder 300 performs CABAC decoding on a value of a syntax element, video decoder 300 may identify a coding context. Video decoder 300 may then divide an interval into a lower sub-interval and an upper sub-interval. One of the sub-intervals may be associated with the value 0 and the other sub-interval may be associated with the value 1. The widths of the sub-intervals may be proportional to the probabilities indicated for the associated values by the identified coding context. If the encoded value is within the lower sub-interval, video decoder 300 may decode a bin having the value associated with the lower sub-interval. If the encoded value is within the upper sub-interval, video decoder 300 may decode a bin having the value associated with the upper sub-interval. To decode a next bin of the syntax element, video decoder 300 may repeat these steps with the interval being the sub-interval that contains the encoded value. When video decoder 300 repeats these steps for the next bin, video decoder 300 may use modified probabilities based on the probabilities indicated by the identified coding context and the decoded bins. Video decoder 300 may then de-binarize the bins to recover the value of the syntax element.

A slice of a picture may include an integer number of blocks of the picture. For example, a slice of a picture may include an integer number of CTUs of the picture. A CTB is an NxN block of samples for a given value N; a division of a component (e.g., a color component) of a picture into CTBs is a partitioning of the picture. A superblock is a top level of a block quadtree within a tile. Furthermore, in some examples, all superblocks within a picture are the same size and are square. For instance, the superblocks may be 128x128 luma samples or 64x64 luma samples. A superblock contains 1 or 2 or 4 mode information blocks or may be bisected in each direction to create 4 sub-blocks, which may themselves be further sub-partitioned, forming the block quadtree. CTBs and superblocks may be roots of partitions into smaller blocks. Thus, discussion of CTBs in this disclosure may also apply to superblocks.

The CTUs of a slice may be ordered consecutively in a scan order, such as a raster scan order. A tile scan is a specific sequential ordering of CTBs partitioning a picture in which the CTBs are ordered consecutively in CTB raster scan in a tile, whereas tiles in a picture are ordered consecutively in a raster scan of the tiles of the picture. In some examples, a tile is a rectangular region of CTBs within a particular tile column and a particular tile row in a picture.

Adaptive Loop Filtering is a technique that may improve quality and/or compressing in video coding. In some implementations of ALF, a video coder (e.g., video encoder 20 or video decoder 30) may determine a classification index for each CTB of a current picture. The classification index for a CTB indicates a class to which the CTB belongs. The video coder may determine the classification index for a CTB based on a directionality of the block and a quantized value of an activity of the block. For instance, the video coder may determine the classification index for a CTB in the manner described in Section 8.6.4.3 of VVC Draft 4. After determining the classification index for a block of the current picture, the video coder may apply a filter to each sample of the block. In some examples, the video coder may use up to three diamond-shaped filters for the luma component. Different classification indexes correspond to different sets of filter coefficients.

In VVC Test Model 4 (VTM-4.0), an adaptive loop filter for a pixel is applied as: $O \left(x, y\right) = I \left(x, y\right) + {\sum }_{\left(i, j\right) \neq \left(0, 0\right)} w \left(i, j\right) ⋅ \left(I\left(x+i,y+j\right)-I\left(x, y\right)\right)$ where samples *I*(*x + i, y + j*) are input samples, *O*(*x, y*) is the filtered output sample (i.e. filter result), and *w*(*i*, *j*) denotes the filter coefficients. Input samples *I(x,y*) may be reconstructed samples of a CTB. This disclosure may refer to values *I*(*x + i, y + j*) *- I*(*x, y*) as input values of an ALF because the ALF filter coefficients are applied to these values.

In Taquet et al., "CE5: Results of tests CE5-3.1 to CE5-3.4 on Non-Linear Adaptive Loop Filter," Joint Video Experts Team (JVET) of ITU-T SG 16 WP 3 and ISO/IEC JTC 1/SC 29/WG 11, 14th Meeting, Geneva, CH, 19-27 March 2019, document no. JVET-N0242 (hereinafter, "JVET-N0242"), equation (1) is modified as by introducing clipping operations to produce equation (2) as follows: $O ′ \left(x, y\right) = I \left(x, y\right) + {\sum }_{\left(i, j\right) \neq \left(0, 0\right)} w \left(i, j\right) ⋅ K \left(I\left(x+i,y+j\right)-I\left(x, y\right),k\left(i, j\right)\right) ,$ where *K*(*d, b*) = min (*b*, max(-*b*, *d*)) is the clipping function, and *k*(*i, j*) are clipping parameters, which depends on the (*i*, *j*) filter coefficient. The clipping parameters *k*(*i, j*) indicate maximum and minimum values that the input value *I*(*x + i, y + j*) *- I*(*x, y*) may have.

The clipping operation may be defined as: $Clip 3 \left(x, y, z\right) = \left\{\begin{matrix}x & ; & z < x \\ y & ; & z > y \\ z & ; & otherwise\end{matrix}\right.$ In Equation 3 above, z is an input value. Furthermore, in Equation 3 above, *x* and *y* are clipping parameters corresponding the maximum and minimum values. The values *x* and *y* for a location (*i,j*) may be denoted as *k*(*i,j*)*.* Evaluation of Equation 3 may require the performance of one or two comparison operations (i.e., z < x; and if z ≥ x then z > y).

In Hu et al., "CE5: Coding tree block based adaptive loop filter (CE5-4)," Joint Video Experts Team (JVET) of ITU-T SG 16 WP 3 and ISO/IEC JTC 1/SC 29/WG 11, 14th Meeting, Geneva, CH, 19-27 March 2019, document no. JVET-N0415 (hereinafter, "JVET-N0415"), video encoder 200 may choose, for a coding tree block (CTB), a filter set from some candidate sets. In other words, video encoder 200 may select a filter set for a CTB from a plurality of candidate sets. In JVET-N0415, when a video coder (e.g., video encoder 200 or video decoder 300) applies ALF to a CTB, one filter set index is signaled for each CTB to indicate which set is applied. The candidate filter sets that may be applied to a CTB include signaled ALF filter sets from previously coded pictures, tile groups, tiles, fixed filter sets (also known as pre-defined filter sets), and the filter set signaled for current tile groups, pictures, or slices if present.

In JVET-N0415, fixed filter sets can also be used as predictors of signaled filter sets. Particularly, JVET-N0415 indicated that, for the luma component, when ALF is applied to a luma CTB, a choice among 16 fixed filter sets, 5 temporal filter set or 1 signaled filter set is indicated. In JVET-N0415, only the filter set index is signaled. Furthermore, in JVET-N0415, for one slice, only one new set of 25 filters can be signaled. Per JVET-N0415, if a new set is signaled for a slice, all the luma CTBs in the same slice share that filter set. Fixed filter sets can be used to predict the new slice-level filter set and can be used as candidate filter sets for a luma CTB as well. The number of filters is 64 in total according to JVET-N0415. For the chroma component, when ALF is applied to a chroma CTB, if a new filter is signaled for a slice, the CTB uses the new filter; otherwise, the most recent temporal chroma filter satisfying the temporal scalability constraint is applied. In the context of JVET-N0415, the temporal scalability constraint refers to a constraint that a picture cannot use coded information, such as filters, from higher temporal layers.

When combining these two methods (i.e., the methods of JVET-N0242 and JVET-N0415), it is unclear how to apply clipping with the fixed filter sets. This disclosure describes example techniques that may be used to perform clipping with fixed filter sets. The examples and techniques of this disclosure may be used individually or in combination.

In accordance with a first example technique of this disclosure, a flag is signaled (e.g., by video encoder 200) at a sequence parameter set or a picture parameter set to indicate whether the fixed filter sets can be used to predict filter coefficients in non-linear ALF filters. A non-linear ALF filter is an ALF filter in which one or more non-linear operations, such as clipping operations, are applied. In contrast, a linear ALF filter is an ALF filter, such as the ALF filters expressed in Equation 1 and Equation 2, in which only linear operations are applied. In this first example, if the fixed filter sets can be used to predict filter coefficients of non-linear ALF filters, video encoder 200 may signal data indicating delta values for the filter coefficients of one or more of the fixed filter sets. Video decoder 300 may obtain the flag from the bitstream. If the flag indicates that the fixed filter sets can be used to predict filter coefficients of non-linear ALF filters, video decoder 300 may obtain the delta values from the bitstream and add the delta values to filter coefficients of one or more of the fixed filter sets to reconstruct the filter coefficients of the non-linear ALF filters.

In accordance with a second example technique of this disclosure, some fixed clipping parameter sets are applied to predict the clipping parameters in a new non-linear ALF filter set. As noted above, the clipping parameters may define upper and lower limits on input values for an ALF. The fixed clipping parameter sets may be predefined. In other words, in this second example, the fixed clipping parameter sets may be defined at video encoder 200 and video decoder 300 so that the fixed clipping parameter sets do not need to be signaled by video encoder 200 in the bitstream. Video decoder 300 does not need to obtain or process any syntax elements from the bitstream to determine the fixed clipping parameter sets.

In this second example, video encoder 200 signals a flag at a sequence-, picture-, slice-, tile group-, or APS-level to determine whether these predefined clipping parameter sets can be used. Additionally, if the predefined clipping parameter sets can be used to predict filter coefficients of non-linear ALF filters, video encoder 200 may signal data indicating delta values for the predefined clipping parameters of one or more of the predefined clipping parameter sets. If the flag indicates that the predefined clipping parameter sets can be used to predict clipping parameters of non-linear ALF filters, video decoder 300 may obtain the delta values from the bitstream and add the delta values to clipping parameters of one or more of the predefined clipping parameter sets to reconstruct the clipping parameters.

In a third example technique, when a fixed filter set is applied to a CTB, clipping may also be applied. For instance, in one example of the third technique, one or more default clipping values are used (e.g., by video encoder 200 or video decoder 300) for a fixed filter set. In one such example, clipping is not applied when fixed filter sets are applied to CTBs. In other words, neither video encoder 200 nor video decoder 300 performs clipping operations as part of applying an ALF to a CTB when one of the fixed filter sets is used to apply the ALF to the CTB. Thus, in such examples, neither video encoder 200 nor video decoder 300 apply clipping to the inputs based on the clipping values being the maximum supported values. In this case, the default clipping values are the maximum values that can be supported. Because the default clipping values are the maximum values that can be supported, video encoder 200 and video decoder 300 may be implemented to avoid performing the clipping operation because the input values can never be larger than the maximum supported values. The maximum supported values themselves may be signaled in the bitstream (e.g., by video encoder 200).

In another example in which a fixed filter set and clipping may be applied, all classes (e.g., filters) of the fixed filter set use the same set of clipping values. For instance, in VVC, each filter set may contain 25 filters, which may also be referred to as classes. In another example in which a fixed filter set and clipping may be applied (e.g., by video encoder 200 and video decoder 300), each class (e.g., filter) has its own set of clipping values.

In one example in which a fixed filter set and clipping may be applied, video encoder 200 may signal a flag for one sequence/picture/tile groups to indicate (e.g., enable) whether clipping can be applied when a fixed filter set is applied to a CTB or other type of block. Signaling the flag for one sequence/picture/tile groups means that video encoder 200 may signal the flag in an SPS, a PPS, or a tile group header. In some examples of the third technique, when clipping can be applied to CTBs (or blocks), video encoder 200 may signal a flag for one sequence/picture/tile groups to indicate that all CTBs (or blocks) in a picture/tile groups use the same clipping parameters. These clipping parameters may be signaled (e.g., by video encoder 200) explicitly or may be the same as the clipping parameters from one or more previously coded clipping parameter sets.

Furthermore, in one example of the third technique, when clipping can be applied to a CTB, video encoder 200 may signal a flag to indicate whether the clipping is applied to the CTB. Video decoder 300 may obtain this flag from the bitstream and determine, based on the flag, whether to apply clipping to the CTB (or block). Clipping information from previously coded CTB (or block) or pre-defined clipping parameters may be used (e.g., by video encoder 200 and video decoder 300) to set up the context models to signal the flag. In other words, video encoder 200 and video decoder 300 may select, based on clipping information from previously coded CTBs or predefined clipping parameters, a context model for use in CABAC coding the flag that indicates whether clipping is applied to the CTB (or block). For instance, a mapping may be defined from each set of predefined clipping parameters to a context model. Video encoder 200 and video decoder 300 may use this mapping to select the context model. Similarly, in some examples, values for upper and lower limits expressed in the clipping information used with previously coded CTBs (or block) may be associated with different context models.

In some examples of the third technique, when clipping is applied to a CTB (or block), video encoder 200 may signal a flag to indicate whether clipping parameters are signaled explicitly, or the clipping parameters are the same as the clipping parameters in one previously coded non-linear ALF filter set. The previously coded non-linear ALF filter set may be signaled earlier in the bitstream than data representing the CTB (or block). Video decoder 300 may obtain the flag from the bitstream. Video decoder 300 may then determine, based on the flag, whether the clipping parameters to be used when applying an ALF to a CTB (or block) are explicitly signaled or are the same as clipping parameters in a previously coded non-linear ALF filter set.

Furthermore, in some examples of the third technique, when a CTB (or block) reuses clipping parameters in one previously coded non-linear ALF filter set or pre-defined clipping parameters, video encoder 200 may signal an index to indicate the previously-coded non-linear ALF filter set or predefined clipping parameters set from which the clipping parameters of the current CTB (or block) are obtained. In such examples, video decoder 300 may obtain the index from the bitstream. Video decoder 300 may determine which previously coded non-linear ALF filter set or predefined clipping parameter set is indicated by the index. Video decoder 300 may use the indicated filter set or clipping parameter set when applying an ALF to the current CTB (or block).

This disclosure may generally refer to "signaling" certain information, such as syntax elements. The term "signaling" may generally refer to the communication, by video encoder 200, of values for syntax elements and/or other data used to decode encoded video data. That is, video encoder 200 may signal values for syntax elements in the bitstream. In general, signaling refers to generating a value in the bitstream. As noted above, source device 102 may transport the bitstream to destination device 116 substantially in real time, or not in real time, such as might occur when storing syntax elements to storage device 112 for later retrieval by destination device 116. Video decoder 300 may obtain signaled information (e.g., syntax elements) from the bitstream. Thus, video encoder 200 may encode a syntax element signaled in the bitstream and video decoder 300 may decode the syntax element signaled in the bitstream; hence, a video coder may code a syntax element signaled in the bitstream.

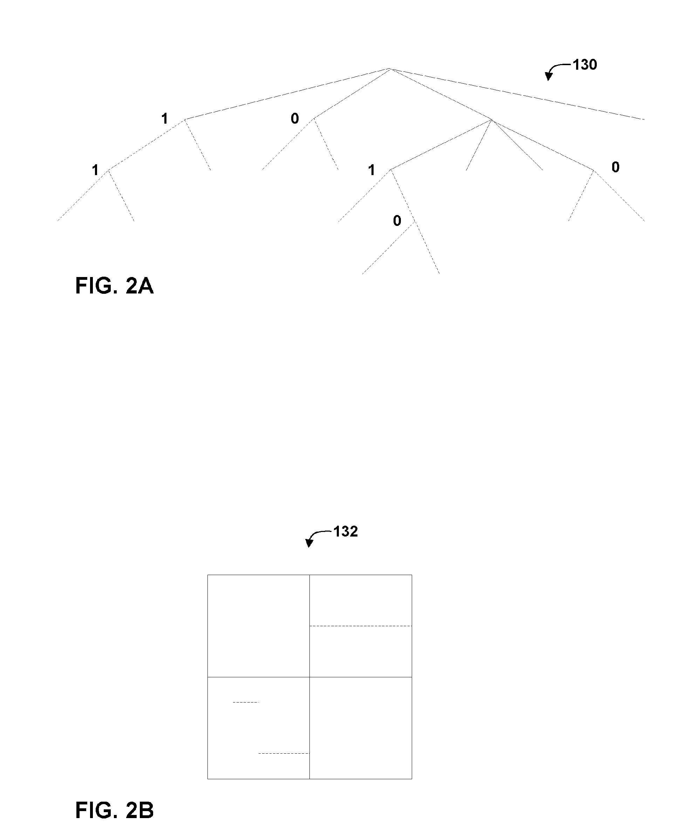

FIGS. 2A and 2B are conceptual diagrams illustrating an example quadtree binary tree (QTBT) structure 130, and a corresponding coding tree unit (CTU) 132. The solid lines represent quadtree splitting, and dotted lines indicate binary tree splitting. In each split (i.e., non-leaf) node of the binary tree, one flag is signaled to indicate which splitting type (i.e., horizontal or vertical) is used, where 0 indicates horizontal splitting and 1 indicates vertical splitting in this example. For the quadtree splitting, there is no need to indicate the splitting type, since quadtree nodes split a block horizontally and vertically into 4 sub-blocks with equal size. Accordingly, video encoder 200 may encode, and video decoder 300 may decode, syntax elements (such as splitting information) for a region tree level (i.e., the first level) of QTBT structure 130 (i.e., the solid lines) and syntax elements (such as splitting information) for a prediction tree level (i.e., the second level) of QTBT structure 130 (i.e., the dashed lines). Video encoder 200 may encode, and video decoder 300 may decode, video data, such as prediction and transform data, for CUs represented by terminal leaf nodes of QTBT structure 130.

In general, CTU 132 of FIG. 2B may be associated with parameters defining sizes of blocks corresponding to nodes of QTBT structure 130 at the first and second levels. These parameters may include a CTU size (representing a size of CTU 132 in samples), a minimum quadtree size (MinQTSize, representing a minimum allowed quadtree leaf node size), a maximum binary tree size (MaxBTSize, representing a maximum allowed binary tree root node size), a maximum binary tree depth (MaxBTDepth, representing a maximum allowed binary tree depth), and a minimum binary tree size (MinBTSize, representing the minimum allowed binary tree leaf node size).

The root node of a QTBT structure corresponding to a CTU may have four child nodes at the first level of the QTBT structure, each of which may be partitioned according to quadtree partitioning. That is, nodes of the first level are either leaf nodes (having no child nodes) or have four child nodes. The example of QTBT structure 130 represents such nodes as including the parent node and child nodes having solid lines for branches. If nodes of the first level are not larger than the maximum allowed binary tree root node size (MaxBTSize), they can be further partitioned by respective binary trees. The binary tree splitting of one node can be iterated until the nodes resulting from the split reach the minimum allowed binary tree leaf node size (MinBTSize) or the maximum allowed binary tree depth (MaxBTDepth). The example of QTBT structure 130 represents such nodes as having dashed lines for branches. The binary tree leaf node is referred to as a coding unit (CU), which is used for prediction (e.g., intra-picture or inter-picture prediction) and transform, without any further partitioning. As discussed above, CUs may also be referred to as "video blocks" or "blocks."

In one example of the QTBT partitioning structure, the CTU size is set as 128x128 (luma samples and two corresponding 64x64 chroma samples), the MinQTSize is set as 16x16, the MaxBTSize is set as 64x64, the MinBTSize (for both width and height) is set as 4, and the MaxBTDepth is set as 4. The quadtree partitioning is applied to the CTU first to generate quad-tree leaf nodes. The quadtree leaf nodes may have a size from 16x16 (i.e., the MinQTSize) to 128x128 (i.e., the CTU size). If the quadtree leaf node is 128x128, it will not be further split by the binary tree, since the size exceeds the MaxBTSize (i.e., 64x64, in this example). Otherwise, the quadtree leaf node will be further partitioned by the binary tree. Therefore, the quadtree leaf node is also the root node for the binary tree and has the binary tree depth as 0. When the binary tree depth reaches MaxBTDepth (4, in this example), no further splitting is permitted. When the binary tree node has width equal to MinBTSize (4, in this example), it implies that no further vertical splitting is permitted. Similarly, a binary tree node having a height equal to MinBTSize implies that no further horizontal splitting is permitted for that binary tree node. As noted above, leaf nodes of the binary tree are referred to as CUs and are further processed according to prediction and transform without further partitioning.

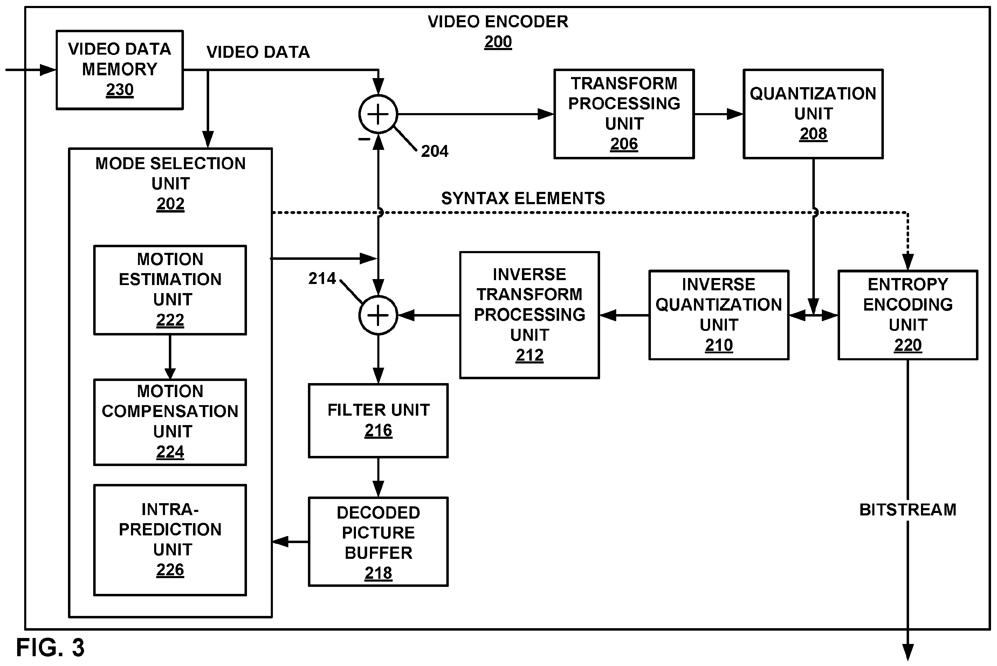

FIG. 3 is a block diagram illustrating an example video encoder 200 that may perform the techniques of this disclosure. FIG. 3 is provided for purposes of explanation and should not be considered limiting of the techniques as broadly exemplified and described in this disclosure. For purposes of explanation, this disclosure describes video encoder 200 in the context of video coding standards such as the HEVC video coding standard and the H.266 (VVC) video coding standard in development. However, the techniques of this disclosure are not limited to these video coding standards and are applicable generally to video encoding and decoding.

In the example of FIG. 3, video encoder 200 includes video data memory 230, mode selection unit 202, residual generation unit 204, transform processing unit 206, quantization unit 208, inverse quantization unit 210, inverse transform processing unit 212, reconstruction unit 214, filter unit 216, decoded picture buffer (DPB) 218, and entropy encoding unit 220. Any or all of video data memory 230, mode selection unit 202, residual generation unit 204, transform processing unit 206, quantization unit 208, inverse quantization unit 210, inverse transform processing unit 212, reconstruction unit 214, filter unit 216, DPB 218, and entropy encoding unit 220 may be implemented in one or more processors or in processing circuitry. Moreover, video encoder 200 may include additional or alternative processors or processing circuitry to perform these and other functions.

Video data memory 230 may store video data to be encoded by the components of video encoder 200. Video encoder 200 may receive the video data stored in video data memory 230 from, for example, video source 104 (FIG. 1). DPB 218 may act as a reference picture memory that stores reference video data for use in prediction of subsequent video data by video encoder 200. Video data memory 230 and DPB 218 may be formed by any of a variety of memory devices, such as dynamic random access memory (DRAM), including synchronous DRAM (SDRAM), magnetoresistive RAM (MRAM), resistive RAM (RRAM), or other types of memory devices. Video data memory 230 and DPB 218 may be provided by the same memory device or separate memory devices. In various examples, video data memory 230 may be on-chip with other components of video encoder 200, as illustrated, or off-chip relative to those components.

In this disclosure, reference to video data memory 230 should not be interpreted as being limited to memory internal to video encoder 200, unless specifically described as such, or memory external to video encoder 200, unless specifically described as such. Rather, reference to video data memory 230 should be understood as reference memory that stores video data that video encoder 200 receives for encoding (e.g., video data for a current block that is to be encoded). Memory 106 of FIG. 1 may also provide temporary storage of outputs from the various units of video encoder 200.

The various units of FIG. 3 are illustrated to assist with understanding the operations performed by video encoder 200. The units may be implemented as fixed-function circuits, programmable circuits, or a combination thereof. Fixed-function circuits refer to circuits that provide particular functionality and are preset on the operations that can be performed. Programmable circuits refer to circuits that can be programmed to perform various tasks and provide flexible functionality in the operations that can be performed. For instance, programmable circuits may execute software or firmware that cause the programmable circuits to operate in the manner defined by instructions of the software or firmware. Fixed-function circuits may execute software instructions (e.g., to receive parameters or output parameters), but the types of operations that the fixed-function circuits perform are generally immutable. In some examples, one or more of the units may be distinct circuit blocks (fixed-function or programmable), and in some examples, the one or more units may be integrated circuits.

Video encoder 200 may include arithmetic logic units (ALUs), elementary function units (EFUs), digital circuits, analog circuits, and/or programmable cores, formed from programmable circuits. In examples where the operations of video encoder 200 are performed using software executed by the programmable circuits, memory 106 (FIG. 1) may store the object code of the software that video encoder 200 receives and executes, or another memory within video encoder 200 (not shown) may store such instructions.

Video data memory 230 is configured to store received video data. Video encoder 200 may retrieve a picture of the video data from video data memory 230 and provide the video data to residual generation unit 204 and mode selection unit 202. Video data in video data memory 230 may be raw video data that is to be encoded.

Mode selection unit 202 includes a motion estimation unit 222, motion compensation unit 224, and an intra-prediction unit 226. Mode selection unit 202 may include additional functional units to perform video prediction in accordance with other prediction modes. As examples, mode selection unit 202 may include a palette coding unit, an intra-block copy coding unit (which may be part of motion estimation unit 222 and/or motion compensation unit 224), an affine coding unit, a linear model (LM) coding unit, or the like.

Mode selection unit 202 generally coordinates multiple encoding passes to test combinations of encoding parameters and resulting rate-distortion values for such combinations. The encoding parameters may include partitioning of CTUs into CUs, prediction modes for the CUs, transform types for residual data of the CUs, quantization parameters for residual data of the CUs, and so on. Mode selection unit 202 may ultimately select the combination of encoding parameters having rate-distortion values that are better than the other tested combinations.

Video encoder 200 may partition a picture retrieved from video data memory 230 into a series of CTUs and encapsulate one or more CTUs within a slice. Mode selection unit 202 may partition a CTU of the picture in accordance with a tree structure, such as the QTBT structure, e.g., of VVC, or the quad-tree structure, e.g., of HEVC, described above. As described above, video encoder 200 may form one or more CUs from partitioning a CTU according to the tree structure. Such a CU may also be referred to generally as a "video block" or "block."

In general, mode selection unit 202 also controls the components thereof (e.g., motion estimation unit 222, motion compensation unit 224, and intra-prediction unit 226) to generate a prediction block for a current block (e.g., a current CU, or in HEVC, the overlapping portion of a PU and a TU). For inter-prediction of a current block, motion estimation unit 222 may perform a motion search to identify one or more closely matching reference blocks in one or more reference pictures (e.g., one or more previously coded pictures stored in DPB 218). In particular, motion estimation unit 222 may calculate a value representative of how similar a potential reference block is to the current block, e.g., according to sum of absolute difference (SAD), sum of squared differences (SSD), mean absolute difference (MAD), mean squared differences (MSD), or the like. Motion estimation unit 222 may generally perform these calculations using sample-by-sample differences between the current block and the reference block being considered. Motion estimation unit 222 may identify a reference block having a lowest value resulting from these calculations, indicating a reference block that most closely matches the current block.

Motion estimation unit 222 may form one or more motion vectors (MVs) that defines the positions of the reference blocks in the reference pictures relative to the position of the current block in a current picture. Motion estimation unit 222 may then provide the motion vectors to motion compensation unit 224. For example, for uni-directional inter-prediction, motion estimation unit 222 may provide a single motion vector, whereas for bi-directional inter-prediction, motion estimation unit 222 may provide two motion vectors. Motion compensation unit 224 may then generate a prediction block using the motion vectors. For example, motion compensation unit 224 may retrieve data of the reference block using the motion vector. As another example, if the motion vector has fractional sample precision, motion compensation unit 224 may interpolate values for the prediction block according to one or more interpolation filters. Moreover, for bi-directional inter-prediction, motion compensation unit 224 may retrieve data for two reference blocks identified by respective motion vectors and combine the retrieved data, e.g., through sample-by-sample averaging or weighted averaging.

As another example, for intra-prediction, or intra-prediction coding, intra-prediction unit 226 may generate the prediction block from samples neighboring the current block. For example, for directional modes, intra-prediction unit 226 may generally mathematically combine values of neighboring samples and populate these calculated values in the defined direction across the current block to produce the prediction block. As another example, for DC mode, intra-prediction unit 226 may calculate an average of the neighboring samples to the current block and generate the prediction block to include this resulting average for each sample of the prediction block.

Mode selection unit 202 provides the prediction block to residual generation unit 204. Residual generation unit 204 receives a raw, uncoded version of the current block from video data memory 230 and the prediction block from mode selection unit 202. Residual generation unit 204 calculates sample-by-sample differences between the current block and the prediction block. The resulting sample-by-sample differences define a residual block for the current block. In some examples, residual generation unit 204 may also determine differences between sample values in the residual block to generate a residual block using residual differential pulse code modulation (RDPCM). In some examples, residual generation unit 204 may be formed using one or more subtractor circuits that perform binary subtraction.

In examples where mode selection unit 202 partitions CUs into PUs, each PU may be associated with a luma prediction unit and corresponding chroma prediction units. Video encoder 200 and video decoder 300 may support PUs having various sizes. As indicated above, the size of a CU may refer to the size of the luma coding block of the CU and the size of a PU may refer to the size of a luma prediction unit of the PU. Assuming that the size of a particular CU is 2Nx2N, video encoder 200 may support PU sizes of 2Nx2N or NxN for intra prediction, and symmetric PU sizes of 2Nx2N, 2NxN, Nx2N, NxN, or similar for inter prediction. Video encoder 200 and video decoder 300 may also support asymmetric partitioning for PU sizes of 2NxnU, 2NxnD, nLx2N, and nRx2N for inter prediction.

In examples where mode selection unit does not further partition a CU into PUs, each CU may be associated with a luma coding block and corresponding chroma coding blocks. As above, the size of a CU may refer to the size of the luma coding block of the CU. The video encoder 200 and video decoder 300 may support CU sizes of 2Nx2N, 2NxN, or Nx2N.

For other video coding techniques such as an intra-block copy mode coding, an affine-mode coding, and linear model (LM) mode coding, as a few examples, mode selection unit 202, via respective units associated with the coding techniques, generates a prediction block for the current block being encoded. In some examples, such as palette mode coding, mode selection unit 202 may not generate a prediction block, and instead generate syntax elements that indicate the manner in which to reconstruct the block based on a selected palette. In such modes, mode selection unit 202 may provide these syntax elements to entropy encoding unit 220 to be encoded.

As described above, residual generation unit 204 receives the video data for the current block and the corresponding prediction block. Residual generation unit 204 then generates a residual block for the current block. To generate the residual block, residual generation unit 204 calculates sample-by-sample differences between the prediction block and the current block.

Transform processing unit 206 applies one or more transforms to the residual block to generate a block of transform coefficients (referred to herein as a "transform coefficient block"). Transform processing unit 206 may apply various transforms to a residual block to form the transform coefficient block. For example, transform processing unit 206 may apply a discrete cosine transform (DCT), a directional transform, a Karhunen-Loeve transform (KLT), or a conceptually similar transform to a residual block. In some examples, transform processing unit 206 may perform multiple transforms to a residual block, e.g., a primary transform and a secondary transform, such as a rotational transform. In some examples, transform processing unit 206 does not apply transforms to a residual block.

Quantization unit 208 may quantize the transform coefficients in a transform coefficient block, to produce a quantized transform coefficient block. Quantization unit 208 may quantize transform coefficients of a transform coefficient block according to a quantization parameter (QP) value associated with the current block. Video encoder 200 (e.g., via mode selection unit 202) may adjust the degree of quantization applied to the coefficient blocks associated with the current block by adjusting the QP value associated with the CU. Quantization may introduce loss of information, and thus, quantized transform coefficients may have lower precision than the original transform coefficients produced by transform processing unit 206.

Inverse quantization unit 210 and inverse transform processing unit 212 may apply inverse quantization and inverse transforms to a quantized transform coefficient block, respectively, to reconstruct a residual block from the transform coefficient block. Reconstruction unit 214 may produce a reconstructed block corresponding to the current block (albeit potentially with some degree of distortion) based on the reconstructed residual block and a prediction block generated by mode selection unit 202. For example, reconstruction unit 214 may add samples of the reconstructed residual block to corresponding samples from the prediction block generated by mode selection unit 202 to produce the reconstructed block.

Filter unit 216 may perform one or more filter operations on reconstructed blocks. For example, filter unit 216 may perform deblocking operations to reduce blockiness artifacts along edges of CUs. In some examples, filter unit 216 may apply the ALF. For instance, in accordance with one or more techniques of this disclosure, filter unit 216 may determine whether a filter set to be used with a CTB is from a plurality of fixed filter sets. If the filter set to be used with the CTB is from the plurality of fixed filter sets, filter unit 216 may set clipping values to maximum supported clipping values. Filter unit 216 may then determine, based on the clipping values, clipped inputs to an ALF. Filter unit 216 may then apply the ALF to the clipped inputs.

Video encoder 200 stores reconstructed blocks in DPB 218. For instance, in examples where operations of filter unit 216 are not needed, reconstruction unit 214 may store reconstructed blocks to DPB 218. In examples where operations of filter unit 216 are needed, filter unit 216 may store the filtered reconstructed blocks to DPB 218. Motion estimation unit 222 and motion compensation unit 224 may retrieve a reference picture from DPB 218, formed from the reconstructed (and potentially filtered) blocks, to inter-predict blocks of subsequently encoded pictures. In addition, intra-prediction unit 226 may use reconstructed blocks in DPB 218 of a current picture to intra-predict other blocks in the current picture.

In general, entropy encoding unit 220 may entropy encode syntax elements received from other functional components of video encoder 200. For example, entropy encoding unit 220 may entropy encode quantized transform coefficient blocks from quantization unit 208. As another example, entropy encoding unit 220 may entropy encode prediction syntax elements (e.g., motion information for inter-prediction or intra-mode information for intra-prediction) from mode selection unit 202. Entropy encoding unit 220 may perform one or more entropy encoding operations on the syntax elements, which are another example of video data, to generate entropy-encoded data. For example, entropy encoding unit 220 may perform a context-adaptive variable length coding (CAVLC) operation, a CABAC operation, a variable-to-variable (V2V) length coding operation, a syntax-based context-adaptive binary arithmetic coding (SBAC) operation, a Probability Interval Partitioning Entropy (PIPE) coding operation, an Exponential-Golomb encoding operation, or another type of entropy encoding operation on the data. In some examples, entropy encoding unit 220 may operate in bypass mode where syntax elements are not entropy encoded.

Video encoder 200 may output a bitstream that includes the entropy encoded syntax elements needed to reconstruct blocks of a slice or picture. In particular, entropy encoding unit 220 may output the bitstream.

The operations described above are described with respect to a block. Such description should be understood as being operations for a luma coding block and/or chroma coding blocks. As described above, in some examples, the luma coding block and chroma coding blocks are luma and chroma components of a CU. In some examples, the luma coding block and the chroma coding blocks are luma and chroma components of a PU.

In some examples, operations performed with respect to a luma coding block need not be repeated for the chroma coding blocks. As one example, operations to identify a motion vector (MV) and reference picture for a luma coding block need not be repeated for identifying a MV and reference picture for the chroma blocks. Rather, the MV for the luma coding block may be scaled to determine the MV for the chroma blocks, and the reference picture may be the same. As another example, the intra-prediction process may be the same for the luma coding blocks and the chroma coding blocks.

Video encoder 200 represents an example of a device configured to encode video data including a memory configured to store video data, and one or more processing units implemented in circuitry and configured to encode, in a sequence parameter set (SPS) or a picture parameter set (PPS) level of a bitstream that comprises an encoded representation of the video data, a syntax element that indicates whether fixed filter sets are usable to predict filter coefficients in non-linear ALF filters, and apply the non-linear ALF filter to a block of the video data based on the syntax element.

In some examples, video encoder 200 represents an example of a device configured to encode video data including a memory configured to store video data, and one or more processing units implemented in circuitry and configured to apply a fixed clipping parameter set to predict clipping parameters of a non-linear ALF filter set, and apply, to a block of the video data, a non-linear ALF filter based on the non-linear ALF filter set. In some examples, video encoder 200 represents an example of a device configured to encode video data including a memory configured to store video data, and one or more processing units implemented in circuitry and configured to determine a filter set for a CTB from a plurality of fixed filter sets, clip inputs to an adaptive loop filter of the filter set, the inputs being samples of the CTB, and apply the ALF to the clipped inputs. Motion estimation unit 222, motion compensation unit 224 and/or intra-prediction unit 226 may use the filtered CTB generated by applying the ALF to the clipped inputs, to generate prediction blocks.

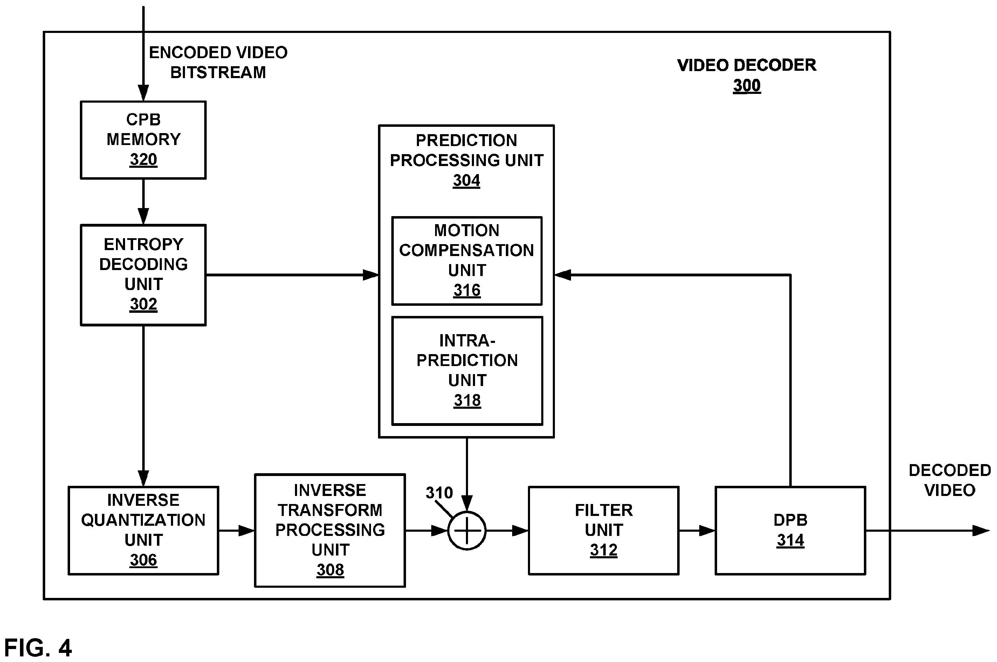

FIG. 4 is a block diagram illustrating an example video decoder 300 that may perform the techniques of this disclosure. FIG. 4 is provided for purposes of explanation and is not limiting on the techniques as broadly exemplified and described in this disclosure. For purposes of explanation, this disclosure describes video decoder 300 according to the techniques of JEM, VVC, and HEVC. However, the techniques of this disclosure may be performed by video coding devices that are configured to other video coding standards.

In the example of FIG. 4, video decoder 300 includes coded picture buffer (CPB) memory 320, entropy decoding unit 302, prediction processing unit 304, inverse quantization unit 306, inverse transform processing unit 308, reconstruction unit 310, filter unit 312, and decoded picture buffer (DPB) 314. Any or all of CPB memory 320, entropy decoding unit 302, prediction processing unit 304, inverse quantization unit 306, inverse transform processing unit 308, reconstruction unit 310, filter unit 312, and DPB 314 may be implemented in one or more processors or in processing circuitry. Moreover, video decoder 300 may include additional or alternative processors or processing circuitry to perform these and other functions.

Prediction processing unit 304 includes motion compensation unit 316 and intra-prediction unit 318. Prediction processing unit 304 may include additional units to perform prediction in accordance with other prediction modes. As examples, prediction processing unit 304 may include a palette unit, an intra-block copy unit (which may form part of motion compensation unit 316), an affine unit, a linear model (LM) unit, or the like. In other examples, video decoder 300 may include more, fewer, or different functional components.

CPB memory 320 may store video data, such as an encoded video bitstream, to be decoded by the components of video decoder 300. The video data stored in CPB memory 320 may be obtained, for example, from computer-readable medium 110 (FIG. 1). CPB memory 320 may include a CPB that stores encoded video data (e.g., syntax elements) from an encoded video bitstream. Also, CPB memory 320 may store video data other than syntax elements of a coded picture, such as temporary data representing outputs from the various units of video decoder 300. DPB 314 generally stores decoded pictures, which video decoder 300 may output and/or use as reference video data when decoding subsequent data or pictures of the encoded video bitstream. CPB memory 320 and DPB 314 may be formed by any of a variety of memory devices, such as dynamic random access memory (DRAM), including synchronous DRAM (SDRAM), magnetoresistive RAM (MRAM), resistive RAM (RRAM), or other types of memory devices. CPB memory 320 and DPB 314 may be provided by the same memory device or separate memory devices. In various examples, CPB memory 320 may be on-chip with other components of video decoder 300, or off-chip relative to those components.

Additionally or alternatively, in some examples, video decoder 300 may retrieve coded video data from memory 120 (FIG. 1). That is, memory 120 may store data as discussed above with CPB memory 320. Likewise, memory 120 may store instructions to be executed by video decoder 300, when some or all of the functionality of video decoder 300 is implemented in software to be executed by processing circuitry of video decoder 300.

The various units shown in FIG. 4 are illustrated to assist with understanding the operations performed by video decoder 300. The units may be implemented as fixed-function circuits, programmable circuits, or a combination thereof. Similar to FIG. 3, fixed-function circuits refer to circuits that provide particular functionality and are preset on the operations that can be performed. Programmable circuits refer to circuits that can be programmed to perform various tasks and provide flexible functionality in the operations that can be performed. For instance, programmable circuits may execute software or firmware that cause the programmable circuits to operate in the manner defined by instructions of the software or firmware. Fixed-function circuits may execute software instructions (e.g., to receive parameters or output parameters), but the types of operations that the fixed-function circuits perform are generally immutable. In some examples, one or more of the units may be distinct circuit blocks (fixed-function or programmable), and in some examples, the one or more units may be integrated circuits.

Video decoder 300 may include ALUs, EFUs, digital circuits, analog circuits, and/or programmable cores formed from programmable circuits. In examples where the operations of video decoder 300 are performed by software executing on the programmable circuits, on-chip or off-chip memory may store instructions (e.g., object code) of the software that video decoder 300 receives and executes.

Entropy decoding unit 302 may receive encoded video data from the CPB and entropy decode the video data to reproduce syntax elements. Prediction processing unit 304, inverse quantization unit 306, inverse transform processing unit 308, reconstruction unit 310, and filter unit 312 may generate decoded video data based on the syntax elements extracted from the bitstream.

In general, video decoder 300 reconstructs a picture on a block-by-block basis. Video decoder 300 may perform a reconstruction operation on each block individually (where the block currently being reconstructed, i.e., decoded, may be referred to as a "current block").

Entropy decoding unit 302 may entropy decode syntax elements defining quantized transform coefficients of a quantized transform coefficient block, as well as transform information, such as a quantization parameter (QP) and/or transform mode indication(s). Inverse quantization unit 306 may use the QP associated with the quantized transform coefficient block to determine a degree of quantization and, likewise, a degree of inverse quantization for inverse quantization unit 306 to apply. Inverse quantization unit 306 may, for example, perform a bitwise left-shift operation to inverse quantize the quantized transform coefficients. Inverse quantization unit 306 may thereby form a transform coefficient block including transform coefficients.

After inverse quantization unit 306 forms the transform coefficient block, inverse transform processing unit 308 may apply one or more inverse transforms to the transform coefficient block to generate a residual block associated with the current block. For example, inverse transform processing unit 308 may apply an inverse DCT, an inverse integer transform, an inverse Karhunen-Loeve transform (KLT), an inverse rotational transform, an inverse directional transform, or another inverse transform to the coefficient block.

Furthermore, prediction processing unit 304 generates a prediction block according to prediction information syntax elements that were entropy decoded by entropy decoding unit 302. For example, if the prediction information syntax elements indicate that the current block is inter-predicted, motion compensation unit 316 may generate the prediction block. In this case, the prediction information syntax elements may indicate a reference picture in DPB 314 from which to retrieve a reference block, as well as a motion vector identifying a location of the reference block in the reference picture relative to the location of the current block in the current picture. Motion compensation unit 316 may generally perform the inter-prediction process in a manner that is substantially similar to that described with respect to motion compensation unit 224 (FIG. 3).

As another example, if the prediction information syntax elements indicate that the current block is intra-predicted, intra-prediction unit 318 may generate the prediction block according to an intra-prediction mode indicated by the prediction information syntax elements. Again, intra-prediction unit 318 may generally perform the intra-prediction process in a manner that is substantially similar to that described with respect to intra-prediction unit 226 (FIG. 3). Intra-prediction unit 318 may retrieve data of neighboring samples to the current block from DPB 314.

Reconstruction unit 310 may reconstruct the current block using the prediction block and the residual block. For example, reconstruction unit 310 may add samples of the residual block to corresponding samples of the prediction block to reconstruct the current block.

Filter unit 312 may perform one or more filter operations on reconstructed blocks. For example, filter unit 312 may perform deblocking operations to reduce blockiness artifacts along edges of the reconstructed blocks. In some examples, filter unit 312 applies an ALF. For instance, in accordance with one or more techniques of this disclosure, filter unit 312 may determine whether a filter set to be used with a CTB is from a plurality of fixed (i.e., pre-defined) filter sets. If the filter set to be used with the CTB is from the plurality of fixed filter sets, filter unit 312 may set clipping values to maximum supported clipping values, which may be equivalent to not applying any clipping. Thus, in such examples, filter unit 312 may not apply clipping to the inputs based on the clipping values being the maximum supported values. Filter unit 312 may then determine, based on the clipping values, clipped inputs to an ALF. Filter unit 312 may then apply the ALF to the clipped inputs.

Video decoder 300 may store the reconstructed blocks in DPB 314. For instance, in examples where operations of filter unit 312 are not performed, reconstruction unit 310 may store reconstructed blocks to DPB 314. In examples where operations of filter unit 312 are performed, filter unit 312 may store the filtered reconstructed blocks to DPB 314. As discussed above, DPB 314 may provide reference information, such as samples of a current picture for intra-prediction and previously decoded pictures for subsequent motion compensation, to prediction processing unit 304. Moreover, video decoder 300 may output decoded pictures from DPB for subsequent presentation on a display device, such as display device 118 of FIG. 1.

In this manner, video decoder 300 represents an example of a device configured to decode video data including a memory (e.g., DPB 314) configured to store video data, and one or more processing units implemented in circuitry and configured to decode, in a SPS or a PPS level of a bitstream that comprises an encoded representation of the video data, a syntax element that indicates whether fixed filter sets are usable to predict filter coefficients in non-linear ALF filters. In some examples, entropy decoding unit 302 decodes the syntax element. Furthermore, the one or more processing units of video decoder 300 may apply the non-linear ALF filter to a block of the video data based on the syntax element. For instance, filter unit 312 may apply the non-linear ALF filter to the block.

In some examples, video decoder 300 represents an example of a device configured to decode video data including a memory (e.g., DPB 314) configured to store video data, and one or more processing units implemented in circuitry and configured to apply a fixed clipping parameter set to predict clipping parameters of a non-linear ALF filter set. Additionally, the one or more processing units of video decoder 300 may apply, to a block of the video data, a non-linear ALF filter based on the non-linear ALF filter set. For instance, filter unit 312 of video decoder 300 may apply the fixed clipping parameter set to predict the clipping parameters of the non-linear ALF filter set and apply the non-linear ALF filter based on the non-linear ALF filter set.

In some examples, video decoder 300 represents an example of a device configured to decode video data including a memory (e.g., DPB 314) configured to store video data, and one or more processing units implemented in circuitry and configured to determine a filter set for a CTB from a plurality of fixed filter sets, clip inputs to an adaptive loop filter of the filter set, the inputs being samples of the CTB, and apply the ALF to the clipped inputs. Filter unit 312 may determine the filter set for the CTB, clip the inputs, and apply the ALF to the clipped inputs.

In some examples, video decoder 300 represents an example of a device configured to decode video data including a memory (e.g., DPB 314) configured to store video data, and one or more processing units implemented in circuitry and configured to determine a filter set for a CTB from a plurality of fixed filter sets, wherein the CTB is in a picture of the video data. In this example, based on the filter set for the CTB being from the fixed filter sets, video decoder 300 sets clipping values to maximum supported values. Additionally, video decoder 300 may determine, based on the clipping values, clipped inputs to an ALF of the filter set, each of the inputs being an input sample minus a current sample. Video decoder 300 may apply the ALF to the clipped inputs. In this example, filter unit 312 of video decoder 300 may determine the filter set, set the clipping values, determine the clipped inputs, and apply the ALF to the clipped inputs. Motion compensation unit 316 and/or intra-prediction unit 318 may use the filtered CTB generated by applying the ALF to the clipped inputs to generate prediction blocks.

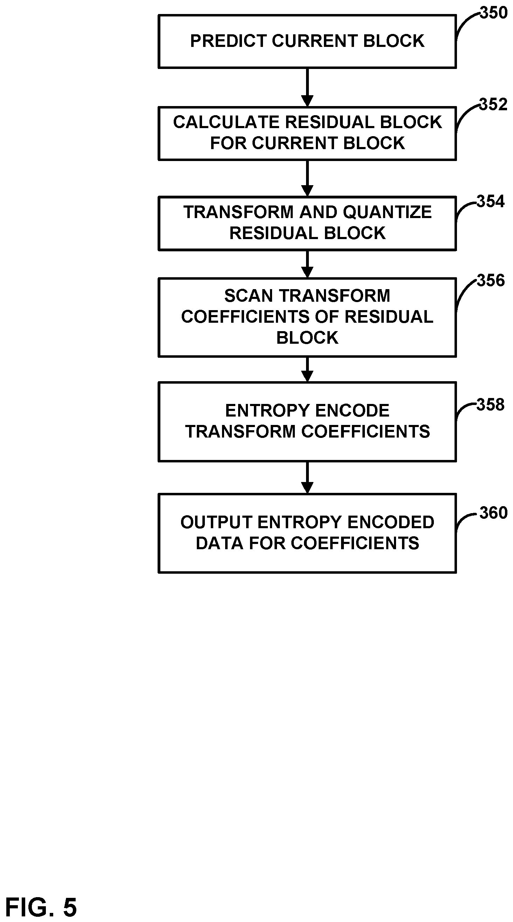

FIG. 5 is a flowchart illustrating an example method for encoding a current block. The current block may comprise a current CU. Although described with respect to video encoder 200 (FIGS. 1 and 2), it should be understood that other devices may be configured to perform a method similar to that of FIG. 5.

In this example, video encoder 200 initially predicts the current block (350). For example, video encoder 200 may form a prediction block for the current block. Video encoder 200 may then calculate a residual block for the current block (352). To calculate the residual block, video encoder 200 may calculate a difference between the original, uncoded block and the prediction block for the current block. Video encoder 200 may then transform and quantize transform coefficients of the residual block (354). Next, video encoder 200 may scan the quantized transform coefficients of the residual block (356). During the scan, or following the scan, video encoder 200 may entropy encode the transform coefficients (358). For example, video encoder 200 may encode the transform coefficients using CAVLC or CABAC. Video encoder 200 may then output the entropy encoded data of the block (360).

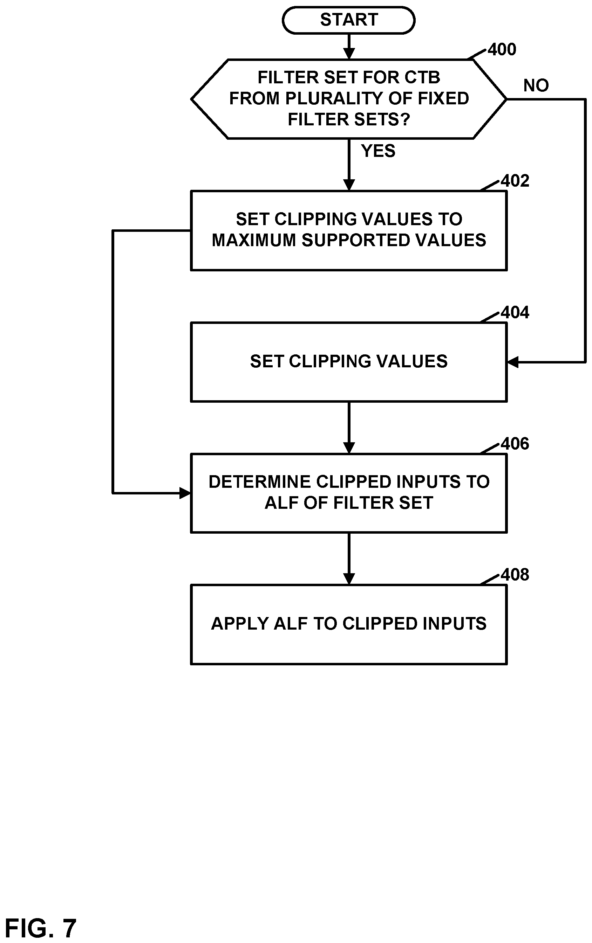

Although not shown in the example of FIG. 5, video encoder 200 may inverse quantize the transform coefficients and apply an inverse transform to the inverse quantized transform coefficients to reconstruct the residual data. Video encoder 200 may reconstruct the current block based on the prediction block and the reconstructed residual data. Video encoder 200 may apply an ALF to a CTB that includes the current block after combining the prediction block and the residual block. FIG. 7, which is described below, includes an example operation for applying an ALF filter to a CTB in accordance with one or more techniques of this disclosure. Video encoder 200 may use the filter CTB for future reference (e.g., as part of a reference picture).

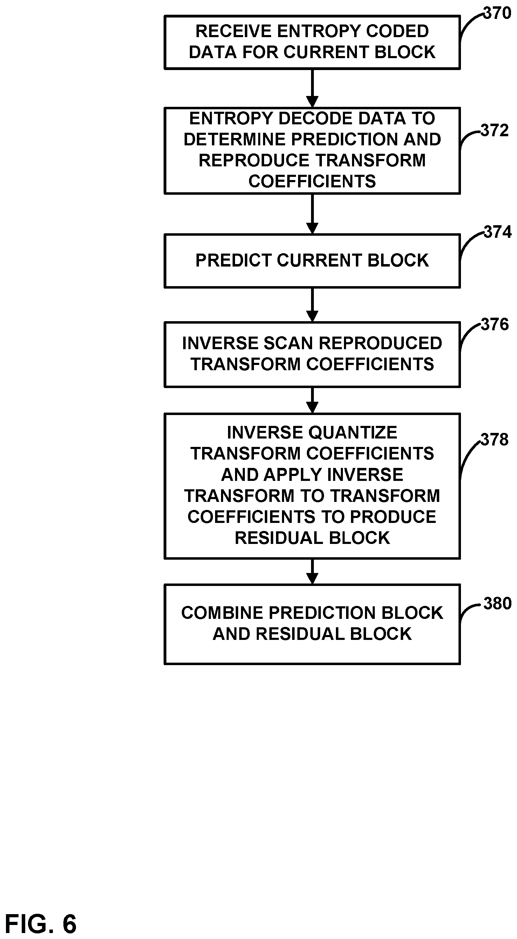

FIG. 6 is a flowchart illustrating an example method for decoding a current block of video data. The current block may comprise a current CU. Although described with respect to video decoder 300 (FIGS. 1 and 3), it should be understood that other devices may be configured to perform a method similar to that of FIG. 6.

Video decoder 300 may receive entropy encoded data for the current block, such as entropy encoded prediction information and entropy encoded data for transform coefficients of a residual block corresponding to the current block (370). Video decoder 300 may entropy decode the entropy encoded data to determine prediction information for the current block and to reproduce transform coefficients of the residual block (372). Video decoder 300 may predict the current block (374), e.g., using an intra- or inter-prediction mode as indicated by the prediction information for the current block, to calculate a prediction block for the current block. Video decoder 300 may then inverse scan the reproduced transform coefficients (376) to create a block of quantized transform coefficients. Video decoder 300 may then inverse quantize the transform coefficients and apply an inverse transform to the transform coefficients to produce a residual block (378). Video decoder 300 may ultimately decode the current block by combining the prediction block and the residual block (380). Although not shown in the example of FIG. 6, video decoder 300 may further apply an ALF to a CTB that includes the current block after combining the prediction block and the residual block. FIG. 7, which is described below, includes an example operation for applying an ALF filter to a CTB in accordance with one or more techniques of this disclosure.

FIG. 7 is a flowchart illustrating an example operation for applying an ALF filter to a CTB, in accordance with one or more techniques of this disclosure. The operation of FIG. 7 may be performed by a video coder, such as video encoder 200 or video decoder 300.

In the example of FIG. 7, the video coder determines whether a filter set for a CTB is from a plurality of fixed filter sets (400). The CTB is in a picture of the video data. The video coder may determine whether the filter set for the CTB is from the plurality of fixed filter sets in one of a variety of ways. For instance, in some examples, a flag signaled in the bitstream may indicate whether the filter set for the CTB is or is not from the plurality of fixed filter sets. This flag may be signaled in a sequence parameter set, a picture parameter set, a slice header, a tile group header, an adaptation parameter set, or in another syntax structure in the bitstream. In other examples, the video coder may determine whether the filter set for the CTB is from the plurality of fixed filter sets based on one or more other factors, such as a position of the CTB within a slice, tile, or picture. For instance, it may be required that the filter set for the first-occurring CTB of a slice, tile, or picture must be from the plurality of fixed filter sets. In some examples, an index signaled in the bitstream may indicate which of the fixed filter sets is the filter set for the CTB.

In response to determining that the filter set for the CTB is from the plurality of fixed filter sets ("YES" branch of 400), the video coder sets the clipping values to maximum supported values (402). The maximum supported values may be based on the bit depths used for samples of the video data. For instance, the maximum supported values may be equal to 2^BitDepth.

In response to determining that the filter set for the CTB is not from the plurality of fixed filter sets ("NO" branch of 400), the video coder sets the clipping values to values other than the maximum supported values (404). For instance, in some examples, a flag signaled in the bitstream may indicate whether the clipping values (i.e., clipping parameters) for the CTB are explicitly signaled or the clipping values for the CTB are the same as (i.e., reused from) the clipping values in a previously coded non-linear ALF filter set. In some examples, when the clipping values for the CTB are reused from a previously coded non-linear ALF filter set or one of the plurality of fixed filter sets, an index signaled in the bitstream may indicate which of the previously coded non-linear ALF filters or fixed filter sets is the filter set for the CTB.

In the example of FIG. 7, after setting the clipping values (404), the video coder determines, based on the clipping values, clipped inputs to an ALF of the filter set (406). Each of the inputs is an input sample minus a current sample. For instance, in Equation 2, above, each of the inputs is of the form *I*(*x + i, y + j*) *- I*(*x, y*) and the video coder may clip the input based on clipping values *k*(*i, j*)*.* If the clipping values are set to the maximum supported values, no clipping would ever occur. Accordingly, after setting the clipping values to the maximum supported values based on the filter set for the CTB being from the fixed filter sets, the video coder may not, in some examples, apply clipping to the inputs. Nevertheless, this disclosure may refer to the inputs coming out of this stage as clipped inputs regardless of whether the video coder actually applies clipping.

The video coder applies the ALF to the clipped inputs (408). For example, as part of applying the ALF to the clipped inputs, the video coder may, for each of the clipped inputs, determine a product for the clipped input. In this example, the product for the clipped input is a result of multiplying a filter coefficient for the clipped input by the clipped input. Additionally, in this example, the video coder may sum the products for the clipped inputs to determine a sum value. The video coder may add the sum value to the current sample. Thus, the video coder may apply Equation 2, above. Subsequently, the video coder may generate a prediction block based on the CTB after application of the ALF to the clipped inputs.

In some examples, the video coder may code (i.e., video encoder 200 may encode or video decoder 300 may decode), in a SPS or a PPS level of a bitstream that comprises an encoded representation of the video data, a syntax element that indicates whether fixed filter sets are usable to predict filter coefficients in non-linear ALF filters. In the case where the flag indicates that the fixed filter sets are usable to predict the filter coefficients, the video coder may use the fixed filter sets to predict the filter coefficients and use the filter coefficients when applying the ALF.

In some examples, the video coder may code a flag that indicates whether clipping is enabled when the filter set is applied to the CTB. In other words, video encoder 200 may encode and/or video decoder 300 may decode a flag that indicates whether clipping is enabled when applying an ALF based on the filter set to the CTB. In the case where the flag indicates that clipping is enabled when the filter set is applied to the CTB, the video coder may perform the operation of FIG. 7. Otherwise, the video coder may apply an ALF based on the filter set without performing any clipping operations.

While the example of FIG. 7 is described with reference to a CTB, the operation of FIG. 7 may be applied with respect to other block types or individual pixels or samples. For instance, in an example where the operation of FIG. 7 is applied with respect to an individual sample, a video coder (e.g., video encoder 200 or video decoder 300) may determine a filter set for a sample from a plurality of fixed filter sets, wherein the sample is in a picture of the video data. In this example, based on the filter set for the sample being from the fixed filter sets, the video coder may set clipping values to maximum supported values. Additionally, the video coder may determine, based on the clipping values, clipped inputs to an ALF of the filter set, each of the inputs being an input sample minus the sample. The video coder may apply the ALF to the clipped inputs, thereby determining an updated value of the sample. The video coder may perform these actions in accordance with the examples provided elsewhere in this disclosure.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable gate arrays (FPGAs), or other equivalent integrated or discrete logic circuitry. Accordingly, the terms "processor" and "processing circuity," as used herein may refer to any of the foregoing structures or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

## Claims

1. A method of encoding video data, the method comprising:
determining a filter set for a coding tree block, CTB, and determining (400) whether the filter set is from a plurality of fixed filter sets, the filter set for the CTB including a set of filter coefficients, wherein the CTB is in a picture of the video data;
based on the filter set for the CTB being from the fixed filter sets, setting (402) clipping parameters to maximum supported values;
based on the filter set for the CTB not being from the fixed filter sets, setting (404) clipping parameters to values other than the maximum supported values;
determining (406), based on the clipping parameters, clipped inputs to an adaptive loop filter, ALF, of the filter set, the clipping parameters indicating maximum and minimum values of the inputs and each of the inputs being an input sample minus a current sample; and
applying (408) the ALF to the clipped inputs.

2. The method of claim 1, wherein applying the ALF to the clipped inputs comprises:
for each of the clipped inputs, determining a product for the clipped input, the product for the clipped input being a result of multiplying a filter coefficient for the clipped input by the clipped input;
summing the products for the clipped inputs to determine a sum value; and
adding the sum value to the current sample.

3. The method of claim 1, wherein the ALF is a non-linear ALF, and the method further comprises:
encoding, in a sequence parameter set, SPS, level or a picture parameter set, PPS, level of a bitstream that comprises an encoded representation of the video data, a syntax element that indicates whether fixed filter sets are usable to predict filter coefficients in non-linear adaptive loop filter, ALF, filters.

4. The method of claim 1, further comprising: encoding a flag that indicates whether clipping is enabled when the filter set is applied to the CTB.

5. The method of claim 1, wherein the method further comprises:
generating a prediction block based on the CTB after application of the ALF to the clipped inputs.

6. A method of decoding video data, the method comprising:
determining a filter set for a coding tree block, CTB, and determining (400) whether the filter set is from a plurality of fixed filter sets, the filter set for the CTB including a set of filter coefficients, wherein the CTB is in a picture of the video data;
based on the filter set for the CTB being from the fixed filter sets, setting (402) clipping parameters to maximum supported values;
based on the filter set for the CTB not being from the fixed filter sets, setting (404) clipping parameters to values other than the maximum supported values;
determining (406), based on the clipping parameters, clipped inputs to an adaptive loop filter, ALF, of the filter set, the clipping parameters indicating maximum and minimum values of the inputs and each of the inputs being an input sample minus a current sample; and
applying (408) the ALF to the clipped inputs.

7. The method of claim 6, wherein applying the ALF to the clipped inputs comprises:
for each of the clipped inputs, determining a product for the clipped input, the product for the clipped input being a result of multiplying a filter coefficient for the clipped input by the clipped input;
summing the products for the clipped inputs to determine a sum value; and
adding the sum value to the current sample.

8. The method of claim 6, wherein the ALF is a non-linear ALF, and the method further comprises:
decoding, in a sequence parameter set, SPS, level or a picture parameter set, PPS, level of a bitstream that comprises an encoded representation of the video data, a syntax element that indicates whether fixed filter sets are usable to predict filter coefficients in non-linear adaptive loop filter, ALF, filters.

9. The method of claim 6, further comprising: decoding a flag that indicates whether clipping is enabled when the filter set is applied to the CTB.

10. The method of claim 6, wherein the method further comprises:
generating a prediction block based on the CTB after application of the ALF to the clipped inputs.

11. A device (200) for encoding video data, the device (200) comprising:
means for determining a filter set for a coding tree block, CTB, and determining (400) whether the filter set is from a plurality of fixed filter sets, the filter set for the CTB including a set of filter coefficients, wherein the CTB is in a picture of the video data;
means for setting (402), based on the filter set for the CTB being from the fixed filter sets, clipping parameters to maximum supported values;
means for setting (404), based on the filter set for the CTB not being from the fixed filter sets, clipping parameters to values other than the maximum supported values;
means for determining (406), based on the clipping parameters, clipped inputs to an adaptive loop filter, ALF, of the filter set, the clipping parameters indicating maximum and minimum values of the inputs and each of the inputs being an input sample minus a current sample; and
means for applying (408) the ALF to the clipped inputs.

12. The device (200) of claim 11, further comprising means for performing the method of any of claims 2 to 5.

13. A device (300) for decoding video data, the device (300) comprising:
means for determining a filter set for a coding tree block, CTB, and determining (400) whether the filter set is from a plurality of fixed filter sets, the filter set for the CTB including a set of filter coefficients, wherein the CTB is in a picture of the video data;
means for setting (402), based on the filter set for the CTB being from the fixed filter sets, clipping parameters to maximum supported values;
means for setting (404), based on the filter set for the CTB not being from the fixed filter sets, clipping parameters to values other than the maximum supported values;
means for determining (406), based on the clipping parameters, clipped inputs to an adaptive loop filter, ALF, of the filter set, the clipping parameters indicating maximum and minimum values of the inputs and each of the inputs being an input sample minus a current sample; and
means for applying (408) the ALF to the clipped inputs

14. The device (300) of claim 13, further comprising means for performing the method of any of claims 7 to 10.

15. A computer-readable storage medium having stored thereon instructions that, when executed by one or more processors, cause said one or more processors to perform the method of any of claims 1 to 10.

## Patentansprüche

1. Verfahren zum Encodieren von Videodaten, wobei das Verfahren Folgendes beinhaltet:
Bestimmen eines Filtersatzes für einen CTB (Coding Tree Block) und Feststellen (400), ob der Filtersatz aus mehreren festen Filtersätzen stammt, wobei der Filtersatz für den CTB einen Satz Filterkoeffizienten umfasst, wobei sich der CTB in einem Bild der Videodaten befindet;
Festlegen (402) von Begrenzungsparametern auf maximal unterstützte Werte auf der Basis, dass der Filtersatz für den CTB aus den festen Filtersätzen stammt;
Festlegen (404) von Begrenzungsparametern auf andere als die maximal unterstützten Werte auf der Basis, dass der Filtersatz für den CTB nicht aus den festen Filtersätzen stammt;
Bestimmen (406), auf der Basis der Begrenzungsparameter, begrenzter Eingänge in ein ALF (Adaptive Loop Filter) des Filtersatzes, wobei die Begrenzungsparameter Maximal- und Minimalwerte der Eingänge angeben und jeder der Eingänge ein Eingangssample minus eines aktuellen Samples ist; und
Anwenden (408) des ALF auf die begrenzten Eingänge.

2. Verfahren nach Anspruch 1, wobei das Anwenden des ALF auf die begrenzten Eingänge Folgendes beinhaltet:
Bestimmen, für jeden der begrenzten Eingänge, eines Produkts für den begrenzten Eingang, wobei das Produkt für den begrenzten Eingang ein Ergebnis der Multiplikation eines Filterkoeffizienten für den begrenzten Eingang mit dem begrenzten Eingang ist;
Summieren der Produkte für die begrenzten Eingänge, um einen Summenwert zu bestimmen; und
Addieren des Summenwerts zum aktuellen Sample.

3. Verfahren nach Anspruch 1, wobei das ALF ein nichtlineares ALF ist und das Verfahren ferner Folgendes beinhaltet:
Encodieren, auf einer SPS-(Sequence Parameter Set)-Ebene oder einer PPS-(Picture Parameter Set)-Ebene eines Bitstroms, der eine encodierte Darstellung der Videodaten umfasst, eines Syntaxelements, das angibt, ob feste Filtersätze zum Vorhersagen von Filterkoeffizienten in nichtlinearen ALF (Adaptive Loop Filters) verwendbar sind.

4. Verfahren nach Anspruch 1, das ferner Folgendes beinhaltet: Encodieren eines Flags, das angibt, ob Begrenzung aktiviert ist, wenn der Filtersatz auf den CTB angewendet wird.

5. Verfahren nach Anspruch 1, wobei das Verfahren ferner Folgendes beinhaltet:
Erzeugen eines Vorhersageblocks auf der Basis des CTB nach Anwendung des ALF auf die begrenzten Eingänge.

6. Verfahren zum Decodieren von Videodaten, wobei das Verfahren Folgendes beinhaltet:
Bestimmen eines Filtersatzes für einen CTB (Coding Tree Block) und Feststellen (400), ob der Filtersatz aus mehreren festen Filtersätzen stammt, wobei der Filtersatz für den CTB einen Satz von Filterkoeffizienten umfasst, wobei sich der CTB in einem Bild der Videodaten befindet;
Festlegen (402) von Begrenzungsparametern auf maximal unterstützte Werte auf der Basis, dass der Filtersatz für den CTB aus den festen Filtersätzen stammt;
Festlegen (404) von Begrenzungsparametern auf andere als die maximal unterstützten Werte auf der Basis, dass der Filtersatz für den CTB nicht aus den festen Filtersätzen stammt;
Bestimmen (406), auf der Basis der Begrenzungsparameter, begrenzter Eingänge in ein ALF (Adaptive Loop Filter) des Filtersatzes, wobei die Begrenzungsparameter Maximal- und Minimalwerte der Eingänge angeben und jeder der Eingänge ein Eingangssample minus eines aktuellen Samples ist; und
Anwenden (408) des ALF auf die begrenzten Eingänge.

7. Verfahren nach Anspruch 6, wobei das Anwenden des ALF auf die begrenzten Eingänge Folgendes beinhaltet:
Bestimmen, für jeden der begrenzten Eingänge, eines Produkts für den begrenzten Eingang, wobei das Produkt für den begrenzten Eingang ein Ergebnis der Multiplikation eines Filterkoeffizienten für den begrenzten Eingang mit dem begrenzten Eingang ist;
Summieren der Produkte für die begrenzten Eingänge, um einen Summenwert zu bestimmen; und
Addieren des Summenwerts zum aktuellen Sample.

8. Verfahren nach Anspruch 6, wobei das ALF ein nichtlineares ALF ist und das Verfahren ferner Folgendes beinhaltet:
Decodieren, auf einer SPS-(Sequence Parameter Set)-Ebene oder einer PPS-(Picture Parameter Set)-Ebene eines Bitstroms, der eine encodierte Darstellung der Videodaten umfasst, eines Syntaxelements, das angibt, ob feste Filtersätze zum Vorhersagen von Filterkoeffizienten in nichtlinearen ALF (Adaptive Loop Filters) verwendbar sind.

9. Verfahren nach Anspruch 6, das ferner Folgendes beinhaltet: Decodieren eines Flags, das angibt, ob Begrenzung aktiviert ist, wenn der Filtersatz auf den CTB angewendet wird.

10. Verfahren nach Anspruch 6, wobei das Verfahren ferner Folgendes beinhaltet:
Erzeugen eines Vorhersageblocks auf der Basis des CTB nach Anwendung des ALF auf die begrenzten Eingänge.

11. Gerät (200) zum Encodieren von Videodaten, wobei das Gerät (200) Folgendes umfasst:
Mittel zum Bestimmen eines Filtersatzes für einen CTB (Coding Tree Block) und Feststellen (400), ob der Filtersatz aus mehreren festen Filtersätzen stammt, wobei der Filtersatz für den CTB einen Satz von Filterkoeffizienten umfasst, wobei sich der CTB in einem Bild der Videodaten befindet;
Mittel zum Festlegen (402) von Begrenzungsparametern auf maximal unterstützte Werte auf der Basis, dass der Filtersatz für den CTB aus den festen Filtersätzen stammt;
Mittel zum Festlegen (404) von Begrenzungsparametern auf andere als die maximal unterstützten Werte auf der Basis, dass der Filtersatz für den CTB nicht aus den festen Filtersätzen stammt;
Mittel zum Bestimmen (406), auf der Basis der Begrenzungsparameter, begrenzter Eingänge in ein ALF (Adaptive Loop Filter) des Filtersatzes, wobei die Begrenzungsparameter Maximal- und Minimalwerte der Eingänge angeben und jeder der Eingänge ein Eingangssample minus eines aktuellen Samples ist; und
Mittel zum Anwenden (408) des ALF auf die begrenzten Eingänge.

12. Gerät (200) nach Anspruch 11, das ferner Mittel zum Durchführen des Verfahrens nach einem der Ansprüche 2 bis 5 umfasst.

13. Gerät (300) zum Decodieren von Videodaten, wobei das Gerät (300) Folgendes umfasst:
Mittel zum Bestimmen eines Filtersatzes für einen CTB (Coding Tree Block) und Feststellen (400), ob der Filtersatz aus mehreren festen Filtersätzen stammt, wobei der Filtersatz für den CTB einen Satz von Filterkoeffizienten umfasst, wobei sich der CTB in einem Bild der Videodaten befindet;
Mittel zum Festlegen (402) von Begrenzungsparametern auf maximal unterstützte Werte auf der Basis, dass der Filtersatz für den CTB aus den festen Filtersätzen stammt;
Mittel zum Festlegen (404) von Begrenzungsparametern auf andere als die maximal unterstützten Werte auf der Basis, dass der Filtersatz für den CTB nicht aus den festen Filtersätzen stammt;
Mittel zum Bestimmen (406), auf der Basis der Begrenzungsparameter, begrenzter Eingänge in ein ALF (Adaptive Loop Filter) des Filtersatzes, wobei die Begrenzungsparameter Maximal- und Minimalwerte der Eingänge angeben und jeder der Eingänge ein Eingangssample minus eines aktuellen Samples ist; und
Mittel zum Anwenden (408) des ALF auf die begrenzten Eingänge.

14. Gerät (300) nach Anspruch 13, das ferner Mittel zum Durchführen des Verfahrens nach einem der Ansprüche 7 bis 10 umfasst.

15. Computerlesbares Speichermedium, auf dem Befehle gespeichert sind, die bei Ausführung durch einen oder mehrere Prozessoren die genannten ein oder mehreren Prozessoren zum Durchführen des Verfahrens nach einem der Ansprüche 1 bis 10 veranlassen.

## Revendications

1. Procédé d'encodage de données vidéo, le procédé comprenant :
la détermination d'un ensemble de filtres pour un bloc d'arbre de codage, CTB, et la détermination (400) que l'ensemble de filtres provient ou non d'une pluralité d'ensembles de filtres fixes, l'ensemble de filtres pour le CTB comportant un ensemble de coefficients de filtre, dans lequel le CTB se trouve dans une image des données vidéo ;
quand l'ensemble de filtres pour le CTB provient des ensembles de filtres fixes, le réglage de paramètres d'écrêtage (402) à des valeurs maximales prises en charge ;
quand l'ensemble de filtres pour le CTB ne provient pas des ensembles de filtres fixes, le réglage des paramètres d'écrêtage (404) à des valeurs différentes des valeurs maximales prises en charge ;
la détermination (406), sur la base des paramètres d'écrêtage, d'entrées écrêtées allant à un filtre à boucle adaptatif, ALF, de l'ensemble de filtres, les paramètres d'écrêtage indiquant des valeurs maximales et minimales des entrées et chacune des entrées étant un échantillon d'entrée moins un échantillon actuel ; et
l'application (408) de l'ALF aux entrées écrêtées.

2. Procédé selon la revendication 1, dans lequel l'application de l'ALF aux entrées écrêtées, comprend :
pour chacune des entrées écrêtées, la détermination d'un produit pour l'entrée écrêtée, le produit pour l'entrée écrêtée résultant de la multiplication d'un coefficient de filtre pour l'entrée écrêtée par l'entrée écrêtée ;
la somme des produits des entrées écrêtées pour déterminer une valeur de somme ; et
l'ajout de la valeur de somme à l'échantillon actuel.

3. Procédé selon la revendication 1, dans lequel l'ALF est un ALF non linéaire, et le procédé comprend en outre :
l'encodage, à un niveau d'ensemble de paramètres de séquence, SPS, ou à un niveau d'ensemble de paramètres d'image, PPS, d'un train de bits qui comprend une représentation encodée des données vidéo, d'un élément de syntaxe qui indique que des ensembles de filtres fixes sont utilisables ou non pour prédire des coefficients de filtre dans des filtres à boucle adaptatifs, ALF, non linéaires.

4. Procédé selon la revendication 1, comprenant en outre : l'encodage d'un drapeau indiquant qu'un écrêtage est activé ou non lorsque l'ensemble de filtres est appliqué au CTB.

5. Procédé selon la revendication 1, le procédé comprenant en outre :
la génération d'un bloc de prédiction basé sur le CTB après application de l'ALF aux entrées écrêtées.

6. Procédé de décodage de données vidéo, le procédé comprenant :
la détermination d'un ensemble de filtres pour un bloc d'arbre de codage, CTB, et la détermination (400) que l'ensemble de filtres provient ou non d'une pluralité d'ensembles de filtres fixes, l'ensemble de filtres pour le CTB comportant un ensemble de coefficients de filtre, dans lequel le CTB se trouve dans une image des données vidéo ;
quand l'ensemble de filtres pour le CTB provient des ensembles de filtres fixes, le réglage de paramètres d'écrêtage (402) à des valeurs maximales prises en charge ;
quand l'ensemble de filtres pour le CTB ne provient pas des ensembles de filtres fixes, le réglage des paramètres d'écrêtage (404) à des valeurs différentes des valeurs maximales prises en charge ;
la détermination (406), sur la base des paramètres d'écrêtage, d'entrées écrêtées allant à un filtre à boucle adaptative, ALF, de l'ensemble de filtres, les paramètres d'écrêtage indiquant des valeurs maximales et minimales des entrées et chacune des entrées étant un échantillon d'entrée moins un échantillon actuel ; et
l'application (408) de l'ALF aux entrées écrêtées.

7. Procédé selon la revendication 6, dans lequel l'application de l'ALF aux entrées écrêtées comprend :
pour chacune des entrées écrêtées, la détermination d'un produit pour l'entrée écrêtée, le produit pour l'entrée écrêtée résultant de la multiplication d'un coefficient de filtre pour l'entrée écrêtée par l'entrée écrêtée ;
la somme des produits des entrées écrêtées pour déterminer une valeur de somme ; et
l'ajout de la valeur de somme à l'échantillon actuel.

8. Procédé selon la revendication 6, dans lequel l'ALF est un ALF non linéaire, et le procédé comprend en outre :
le décodage, à un niveau d'ensemble de paramètres de séquence, SPS, ou à un niveau d'ensemble de paramètres d'image, PPS, d'un train de bits qui comprend une représentation encodée des données vidéo, d'un élément de syntaxe qui indique que des ensembles de filtres fixes sont utilisables ou non pour prédire des coefficients de filtre dans des filtres à boucle adaptatifs, ALF, non linéaires.

9. Procédé selon la revendication 6, comprenant en outre : le décodage d'un drapeau indiquant qu'un écrêtage est activé ou non lorsque l'ensemble de filtres est appliqué au CTB.

10. Procédé selon la revendication 6, le procédé comprenant en outre :
la génération d'un bloc de prédiction sur la base du CTB après application de l'ALF aux entrées écrêtées.

11. Dispositif (200) d'encodage de données vidéo, le dispositif (200) comprenant :
un moyen de détermination d'un ensemble de filtres pour un bloc d'arbre de codage, CTB, et de détermination (400) que l'ensemble de filtres provient ou non d'une pluralité d'ensembles de filtres fixes, l'ensemble de filtres pour le CTB comportant un ensemble de coefficients de filtre, dans lequel le CTB se trouve dans une image des données vidéo ;
un moyen de réglage (402) quand l'ensemble de filtres pour le CTB provient des ensembles de filtres fixes, de paramètres d'écrêtage à des valeurs maximales prises en charge ;
un moyen de réglage (404), quand l'ensemble de filtres pour le CTB ne provient pas des ensembles de filtres fixes, de paramètres d'écrêtage à des valeurs différentes des valeurs maximales prises en charge ;
un moyen de détermination (406), sur la base des paramètres d'écrêtage, d'entrées écrêtées allant à un filtre à boucle adaptative, ALF, de l'ensemble de filtres, les paramètres d'écrêtage indiquant des valeurs maximales et minimales des entrées et chacune des entrées étant un échantillon d'entrée moins un échantillon actuel ; et
un moyen d'application (408) de l'ALF aux entrées écrêtées.

12. Dispositif (200) selon la revendication 11, comprenant en outre un moyen de réalisation du procédé selon l'une quelconque des revendications 2 à 5.

13. Dispositif (300) de décodage de données vidéo, le dispositif (300) comprenant :
un moyen de détermination d'un ensemble de filtres pour un bloc d'arbre de codage, CTB, et la détermination (400) que l'ensemble de filtres provient ou non d'une pluralité d'ensembles de filtres fixes, l'ensemble de filtres pour le CTB comportant un ensemble de coefficients de filtre, dans lequel le CTB se trouve dans une image des données vidéo ;
un moyen de réglage (402) quand l'ensemble de filtres pour le CTB provient des ensembles de filtres fixes, de paramètres d'écrêtage à des valeurs maximales prises en charge ;
un moyen de réglage (404), quand l'ensemble de filtres pour le CTB ne provient pas des ensembles de filtres fixes, de paramètres d'écrêtage à des valeurs différentes des valeurs maximales prises en charge ;
un moyen de détermination (406), sur la base des paramètres d'écrêtage, d'entrées écrêtées allant à un filtre à boucle adaptative, ALF, de l'ensemble de filtres, les paramètres d'écrêtage indiquant des valeurs maximales et minimales des entrées et chacune des entrées étant un échantillon d'entrée moins un échantillon actuel ; et
un moyen d'application (408) de l'ALF aux entrées écrêtées

14. Dispositif (300) selon la revendication 13, comprenant en outre un moyen de réalisation du procédé selon l'une quelconque des revendications 7 à 10.

15. Support de stockage lisible par ordinateur sur lequel sont stockées des instructions qui, une fois exécutées par un ou plusieurs processeurs, amènent lesdits un ou plusieurs processeurs à réaliser le procédé selon l'une quelconque des revendications 1 à 10.
